(19) Europäisches Patentamt
European Patent Office
Office européen des brevets

(11) Veröffentlichungsnummer: **0 211 326**
**B1**

(12) # EUROPÄISCHE PATENTSCHRIFT

(45) Veröffentlichungstag der Patentschrift: **06.06.90**

(51) Int. Cl.$^5$: **C 09 B 43/26,** C 09 B 43/30, C 09 D 11/02

(21) Anmeldenummer: **86110093.1**

(22) Anmeldetag: **23.07.86**

(54) **Herstellung von Illustrationstiefdruckfarben.**

(30) Priorität: **08.08.85 DE 3528422**
**09.01.86 DE 3600387**

(43) Veröffentlichungstag der Anmeldung:
**25.02.87 Patentblatt 87/09**

(45) Bekanntmachung des Hinweises auf die Patenterteilung:
**06.06.90 Patentblatt 90/23**

(84) Benannte Vertragsstaaten:
**CH DE FR GB IT LI**

(56) Entgegenhaltungen:
**US-A-3 971 741**

(73) Patentinhaber: **BAYER AG**
**D-5090 Leverkusen 1 Bayerwerk (DE)**

(72) Erfinder: **Lorenz, Manfred, Dr.**
**Roggendorfstrasse 51**
**D-5000 Köln 80 (DE)**
Erfinder: **Haus, Artur, Dr.**
**Zum Eschental 8**
**D-5063 Overath (DE)**

**EP 0 211 326 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von Illustrationstiefdruckfarben unter Verwendung von Pyridonazofarbstoffen sowie neue Pyridonazofarbstoffe.

Bei Illustrationstiefdruckfarben, die z.B. zum Bedrucken von illustrierten Zeitschriften und Versandkatalogen dienen, handelt es sich um niedrigviskose Flüssigkeiten, die vorzugsweise aus 5—10% Pigment, 25—40% Harz und Lösungsmittel bestehen (siehe Ullmanns Encyklopädie der technischen Chemie, 4. Auflage, Band 10, S. 196; Verlag Chemie, Weinheim 1979). Diese Tiefdruckfarben trocknen durch Verdunsten der Lösungsmittel, wobei des Harz und das Pigment auf dem Druckträger zurückbleiben. Est ist wichtig, daß dabei das Pigment möglichst auf der Oberfläche des Druckträgers verbleibt, da ein zu tiefes Eindringen des farbgebenden Mittels in den Druckträger zu einer Verminderung der scheinbaren Farbintensität führt. Beim Bedrucken von dünnen und ungestrichenen Papieren kann es durch zu tiefes Eindringen des farbgebenden Mittels sogar zu einem Durchschlagen bis auf die Rückseite des Papiers kommen, wodurch sowohl Farbstärke als auch Glanz beeinträchtigt werden und außerdem ein sauberes Bedrucken der Rückseite erschwert wird, Durch Verwendung von Spezialpigmenten bei der Herstellung von Illustrationstiefdruckfarben werden, bedingt durch die Filterwirkung des saugfähigen Untergrunds, die Pigmentteilchen auf oder nahe der Oberfläche zurückgehalten, wobei jedoch wegen der niedrigen Viskosität der Druckbfarben und dem dadurch bedingten raschen Eindringen auch hier Durchschlagserscheinungen auftreten können. Um so mehr ist mit diesen Schwierigkeiten zu rechnen, wenn man an Stelle von Pigmenten lösliche Farbstoffe bei der Herstellung von Illustrationstiefdruckfarben verwendet. Da hierbei die Filterwirkung des Druckträgers entfällt, kann der lösliche Farbstoff besonders leicht und tief eindringen. Dies ist der Grund dafür, daß bisher lösliche Farbmittel beim Illustrationstiefdruckverfahren nur sehr beschränkt Verwendung gefunden haben, z.B. als sogenannte Schönungsfarbstoffe zusammen mit einem überwiegenden Anteil an Pigmenten. Eine größere Menge an löslichen Farbstoffen würde insbesondere auf dünnen und saugfähigen Papieren das Durchschlagen und Durchscheinen verursachen.

Es wurde nun überraschend gefunden, daß sich auch bestimmte Pyridonazofarbstoffe zur Herstellung von Illustrationstiefdruckfarben eignen.

Eine Gruppe dieser Pyridonazofarbstoffe ist dadurch erhältlich, daß man Pyridonazofarbstoffe mit 1—4 Hydroxy-gruppen oder mit 1—4 Carboxylgruppen mit Di- oder Polyhydroxyverbindungen oder mit Di- oder Polycarbonsäuren unter esterartiger Verknüpfung von mindestens zwei gleichen oder verschiedenen Pyridonazofarbstoffen umsetzt.

Die Pyridonazofarbstoffe mit 1—4 Hydroxygruppen entsprechen vorzugsweise der Formel

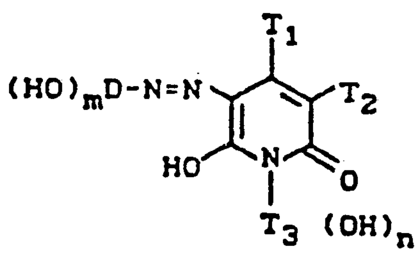

I

in der

D den Rest einer Diazokomponente,

$T_1$ Alkyl, Aryl, —$COOT_4$,

$T_2$ H, —CN, —$COOT_4$, —CONH—$T_5(OH)_n$,

$T_3$ aliphatische oder araliphatische Reste, die durch ein oder mehrere Sauerstoffatome unterbrochen sein können,

$T_4$ Wasserstoff, Alkyl,

$T_5$ aliphatische oder araliphatische Reste, die durch ein oder mehrere Sauerstoffatome unterbrochen sein können,

m, n, 0, 1, 2, 3 oder 4, mit der Maßgabe, daß die Summe aus m + n 1, 2, 3 oder 4 beträgt, bezeichnen,

D steht vorzugsweise für einen Phenylrest der 1—4 Substituenten aus der Reihe gegebenenfalls substituiertes $C_1$—$C_{12}$-Alkyl, $C_2$—$C_{12}$-Alkenyl, Cyclohexyl, Cyclopentyl, Cyclohexenyl, Halogen wie Cl, Br, F, $C_1$—$C_6$-Alkoxy, gegebenenfalls substituiertes Phenoxy, —CN, —$CF_3$, —$NO_2$, gegebenenfalls substituiertes $C_1$—$C_{18}$-Alkylsulfonyl, gegebenenfalls substituiertes Phenylsulfonyl, gegebenenfalls substituiertes Benzylsulfonyl, gegebenenfalls substituiertes Phenoxysulfonyl, gegebenenfalls substituiertes Carbamoyl, gegebenenfalls substituiertes Sulfamoyl tragen kann.

Die Alkyreste in $C_1$—$C_{12}$-Alkyl und $C_1$—$C_{18}$-Alkylsulfonyl können z.B. durch —OH, $C_1$—$C_6$-Alkoxy oder —CN substituiert sein. Die Phenylreste in Phenoxy, Phenylsulfonyl, Phenoxysulfonyl und Bezylsulfonyl können z.B. durch $C_1$—$C_4$-Alkyl oder Halogen wie Cl und Br substituiert sein.

Die Carbamoylgruppen tragen vorzugsweise zwei gleiche oder verschiedene Substituenten aus der Reihe $C_1$—$C_{18}$-Alkyl, die z.B. durch —OH substituiert sein können, $C_2$—$C_{18}$-Alkenyl, Aryloxyalkyl, $C_9$—$C_{11}$-Aralkoxyalkyl, $C_7$—$C_{11}$-Aralkyl, $C_4$—$C_{13}$-Acyloxyalkyl, $C_6$—$C_{14}$Alkoxycarbonyloxyalkyl, $C_6$—$C_{12}$-

Alkylaminocarbonyloxyalkyl, $C_4$—$C_9$-Dialkylaminoalkyl; entsprechende Diazokomponenten sind aus der DE—A1 3 111 648 bekannt.

Die Sulfamoylgruppen tragen bevorzugt 1 oder 2 Substituenten aus der Reihe $C_1$—$C_{18}$-Alkyl, gegebenenfalls durch 0 unterbrochenen und gegebenenfalls durch Hydroxy oder Phenoxy substituiertes $C_1$—$C_{12}$-Akyl oder $C_7$—$C_{11}$-Aralkyl; entsprechende Diazokomponenten sind aus der EP—A1 18 567 bekannt.

Als Beispiels für Diazokomponenten seien genannt:

Anilin, o-, m- und p-Toluidin, o- und p-Ethylanilin, 2,3-Dimethylanilin, 3,4-Dimethylanilin, 2,4-Dimethylanilin, 2,5-Dimethylanilin, o-i-Propylanilin, p-i-Propylanilin, 2,4,5- und 2,3,5-Trimethylanilin, 2-Methyl-5-i-propylanilin, 4-tert.-Butylanilin, 4-sec.-Butylanilin, Anilin, das durch geradkettiges oder verzweigtes $C_{12}H_{25}$-Alkyl o- oder p-ständig substituiert ist 4-Cyclohexylanilin, 4-Cyclohexyl-2-methylanilin, 4-(1-Cyclohexen-1-yl)-anilin, o-, m- und p-Chloranilin, 2,3-, 2,4-, 2,5- und 3,4-Dichloranilin, 5-Chlor-2-methylanilin, 4-Chlor-2-methylanilin, 3-Chlor-2-methylanilin, 2-Chlor-5-methylanilin, 4-Chlor-3-methylanilin, 3-Chlor-4-methylanilin, 2-Chlor-3,4-dimethylanilin, 5-Chlor-2,4-dimethylanilin, 4-Chlor-2,5-dimethylanilin, o-, m- und p-Nitroanilin, 2-Chlor-4-nitroanilin, 2-Nitro-4-chloranilin, 2-Methyl-4-nitroanilin, 4-Methyl-2-nitroalinin, 2,4-Dimethyl-5-nitroanilin, 2,5-Dimethyl-4-nitroanilin, 4-i-Propyl-2-nitroanilin, 4-tert.-Butyl-2-nitroanilin, 4-Cyclohexyl-2-nitroanilin, o-, m- und p-Methyoxyanilin, 2-Ethoxy und 4-Ethoxyanilin, 2-Phenoxyanilin, 2-(2-Methylphenoxy)-anilin, 5-Chlor-2-methoxyanilin, 5-Chlor-2-phenoxyanilin, 5-Chlor-2-(4-chlorphenoxy)-anilin, 4,5-Dichlor-2-methoxyanilin, 2-Methoxy-5-nitroanilin, 2-Methoxy-4-nitroanilin, 3-Chlor-4-methoxyanilin, 4-Methoxy-2-nitroanilin, 4-Ethoxy-2-nitroanilin, 4-Ethoxy-3-nitroanilin, 3-Methoxy-4-methylanilin, 4-Methoxy-2-methylanilin, 2-Methoxy-5-methylanilin, 2-Ethoxy-5-methylanilin, 4-Chlor-2-methoxy-5-methylanilin, 4-Chlor-2,5-dimethoxyanilin, 2,5-Dimethoxy-4-nitroanilin, 2-(Phenylsulfonyl)-anilin, 2-(Methylsulfonyl)-4-nitroanilin, 2-Methoxy-5-(phenylsulfonyl)-anilin, 5-(Benzysulfonyl)-2-methoxyanilin, 5-(Ethylsulfonyl)-2-methoxyanilin,

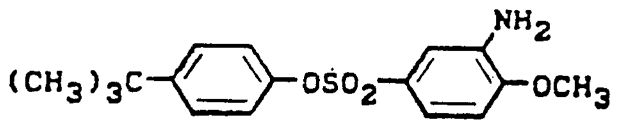 ,

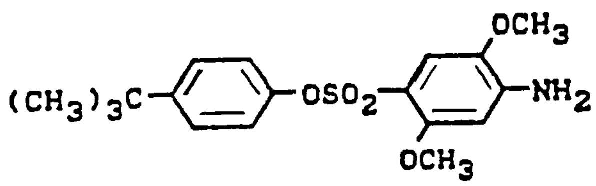 .

Für den Fall, daß m in Formel I > O ist, d.h. die Diazokomponente 1—4 Hydroxygruppen aufweist, steht D vorzugsweise für einen Phenylrest der durch Hydroxy-$C_1$—$C_{18}$-alkoxy, —$NO_2$, —CN, F, Cl, Br, $C_1$—$C_4$-Alkyl substituiert sein kann, oder durch einen Rest der Formeln

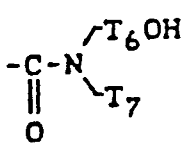 , 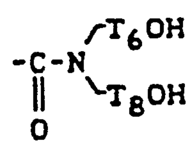 ,

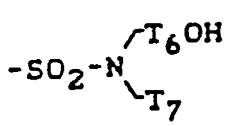 , 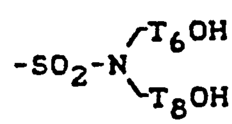

substituiert ist, wobei

$T_6$, $T_8$ einen aliphatischen Rest, der durch ein oder mehrere Sauerstoffatome unterbrochen sein kann und

$T_7$ Wasserstoff, einen aliphatischen oder araliphatischen Rest, die durch ein oder mehrere Sauerstoffatome unterbrochen sein können, bezeichnen; der Phenylrest

D kann 1—3, vorzugsweise 1 oder 2, weitere Substituenten aus der oben genannten Reihe aufweisen.

Alkyl ($T_1$, $T_4$) bezeichnen vorzugsweise $C_1$—$C_6$-Alkyl, insbesondere Methyl und Ethyl.

Aryl ($T_1$) steht vorzugsweise für Phenyl oder Naphthyl.

Ist n = O, so stehen $T_3$, $T_5$ vorzugsweise für $C_1$—$C_{22}$-Alkyl, $C_2$—$C_{22}$-Alkenyl, $C_3$—$C_7$-Cycloalkyl, Benzyl, Phenethyl, $C_2$—$C_{18}$-Alkoxyakyl, Phenoxy-$C_1$—$C_{22}$-alkyl, Phenoxy-$C_2$—$C_{18}$-alkoxyalkyl.

Geeignete Reste $T_3$ oder $T_5$ sind z.B. Methyl, Ethyl, n- und i-Propyl, Allyl, n- und i-Butyl, n- und i-Pentyl, —$CH_2C(CH_3)_3$, n-Hexyl, Cyclohexyl, n-Octyl, 2-Ethylhexyl, Decyl, Dodecyl, Palmityl, Stearyl, Oleyl; —$CH_2CH_2OCH_3$, —$CH_2CH_2OC_2H_5$, —$CH_2CH_2CH_2O(CH_2)_3CH_3$,

$-CH_2CH_2CH_2OCH_2CH(C_2H_5)(CH_2)_3CH_3$, $-CH_2CH_2CH_2O(CH_2)_{11}CH_3$

$-CH_2CH_2OCH_2CH_2OCH_3$, $-CH_2CH_2CH_2OCH_2CH_2O(CH_2)_3CH_3$,

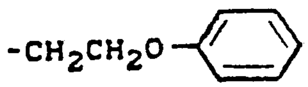 , 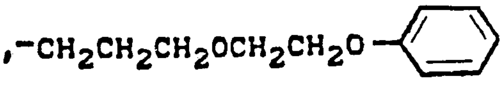 ,

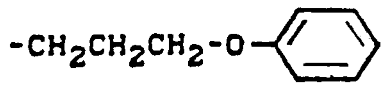 .

Ist n > O, so stehen $T_3$, $T_5$ vorzugesweise für einen $C_2$—$C_{18}$-Alkylrest, der durch 1—6 O-Atome unterbrochen sein kann; Beispiele für entsprechende Hydroxyalkylreste sind:

$-CH_2CH_2OH$, $-CH_2CH_2CH_2OH$, $-CH_2CH(OH)CH_3)$, $-CH_2CH(OH)CH_2CH_3$, $-CH_2CH_2CH(OH)CH_3$, $-CH_2CH_2CH_2CH_2OH$, $-CH_2CH_2OCH_2CH_2OH$, $-CH_2CH_2(OCH_2CH_2)_pOH$, (p = 1—5), $-CH_2CH_2CH_2OCH_2CH_2OH$, $-CH_2CH_2CH_2(OCH_2CH_2)_qOH$, (q = 1—3), $-CH_2CH_2CH_2O(CH_2)_4OH$, $-CH_2CH_2CH_2O(CH_2)_6OH$, $-CH_2CH_2CH_2OCH_2CH_2CH(CH_3)CH_2CH_2OH$,

$-CH_2CH(OH)CH_2OH$, $-CH(CH_3)-CH_2OH$, $-C(CH_3)(CH_2OH)_2$,

Die Pyridonazofarbstoffe mit 1—4 Carboxylgruppen entsprechen vorzugsweise der Formel

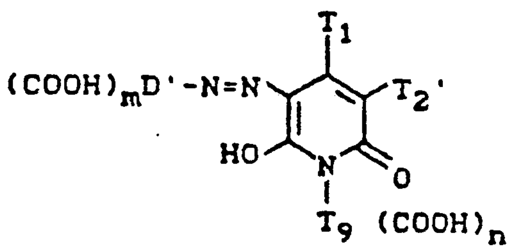 II

in der

m, n und $T_1$ die zu Formel I angegebenen Bedeutungen haben,

$T_2'$ H, —CN, —$COOT_4$, mit der zu Formel I angegebenen Bedeutung für $T_4$,

$T_9$ einen aliphatischen oder araliphatischen Rest, die durch ein oder mehrere Sauerstoffatome unterbrochen sein können,

D' den Rest einer Diazokomponente bezeichnen.

Für den Fall, daß n = O ist, steht $T_9$ vorzugsweise für $C_1$—$C_{22}$-Alkyl, $C_2$—$C_{22}$-Alkenyl, $C_3$—$C_7$-Cycloalkyl, Benzyl, Phenethyl, $C_2$—$C_{18}$-Alkoxyalkyl, Phenoxy-$C_1$—$C_{22}$-alkyl, Phenoxy-$C_2$—$C_{18}$-alkoxyalkyl.

Geeignete Reste $T_9$ sind z.B. Methyl, Ethyl, n- und i-Propyl, Allyl, n- und i-Butyl, n- und i-Pentyl, $-CH_2C(CH_3)_3$, n-Hexyl, Cyclohexyl, n-Octyl, 2-Ethylhexyl, Decyl, Dodecyl, Palmityl, Stearyl, Oleyl, $-CH_2CH_2OCH_3$, $CH_2CH_2OC_2H_5$, $-CH_2CH_2CH_2O(CH_2)_3CH_3$,

$-CH_2CH_2CH_2OCH_2-CH(C_2H_5)(CH_2)_3CH_3$, $-CH_2CH_2CH_2O(CH_2)_{11}CH_3$,

$-CH_2CH_2OCH_2CH_2OCH_3$, $-CH_2CH_2CH_2OCH_2CH_2O(CH_2)_3CH_3$,

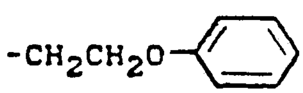 , 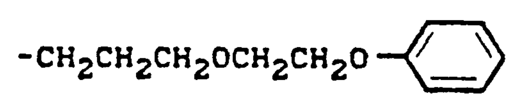 ,

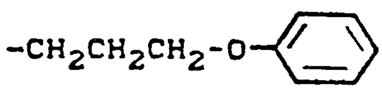 .

Für den Fall, daß n > O ist, steht $T_9$ vorzugsweise für einen $C_1$—$C_{12}$-Alkylrest. Beispiele für entsprechende Reste —$T_9$ $(COOH)_n$ sind:

$$—CH_2COOH, —CH_2CH_2COOH, —CH(CH_3)COOH, —(CH_2)_5COOH,$$

$$—(CH_2)_{10}COOH, —(CH_2)_{11}—COOH, HOOCCH_2—CHCOOH,$$

D' hat vorzugsweise die für D genannten Bedeutungen. Für den Fall, daß m in Formel II > O ist, d.h. die Diazokomponente 1—4 Carboxylgruppen aufweist, können diese Carboxylgruppen direkt oder über Zwischenglieder an den Phenylring gebunden sein.

Beispiele für Diazokomponenten mit unmittelbar gebundener Carboxylgruppe sind: 2-, 3- oder 4-Aminobenzoesäure, 4-Chlor-, 4-Methoxy- oder 4-Methyl-3-amino-benzoesäure, 3- oder 4-Aminophthalsäure, 5-Aminoisophthalsäure, 2-Aminoterephthalsäure.

Als Zwischenglieder kommen z.B. $C_1$—$C_6$-Alkyliden oder —O—($C_1$—$C_6$-Alkyliden)-Gruppen in Frage; Beispiele für entsprechende Diazokomponenten sind: 2-, 3- oder 4-Aminophenoxyessigsäure, 2-, 3- oder 4-Aminophenoxypropionsäure, 2-, 3- oder 4-Aminophenylessigsäure bzw. die Derivate der genannten Säuren, die durch 1 oder 2 Substituenten aus der Reihe $C_1$—$C_4$-Alkyl, Halogen wie Cl, Br, F, —CN, —$NO_2$ substituiert sind.

Für die Umsetzung mit den Farbstoffen der Formel I vorzugsweise geeignete Di- oder Polcarbonsäuren sind Oxalsäure oder Carbonsäuren der Formel

$$[G'] \!-\! (COOH)_a \qquad III$$

in der G' einen aliphatischen oder aromatischen Kohlenwasserstoffrest mit 1—51 C-Atomen bezeichnet und

a 2, 3 oder 4 bezeichnet

sowie Carbonsäuren der Formel

$$[G''] \!-\! (OCH_2CH_2—COOH)_{a'} \qquad IV$$

in der

G'' einen vorzugsweise gesättigten Kohlenwasserstoffrest mit 2 bis 20 C-Atomen, bei dem die C-Kette durch 1—9, nicht nachbarständige O-Atome unterbrochen sein kann und

a' 2, 3, 4 oder 5 bezeichnen.

Die Verbindungen der Formel IV sind z.B. durch Addition von Acrylnitril and Di- oder Polyole und anschließende Hydrolyse erhältlich.

Beispiele für Carbonsäuren der Formel III sind: Maleinsäure, Furmarsäure, Itanconsäure, Bernsteinsäure, Adipinsäure und bevorzugt höhere Dicarbonsäuren, wie Korksäure, Acelainsäure, Sebacinsäure, Dodecandisäure, Dodecenylbernsteinsäure, 1,4-Cyclhexandicarbonsäure, Phthalsäure, Isophthalsäure, Terephthalsäure, Hexahydrophthalsäure, Tetrahydrophthalsäure, 4-Methylhexahydrophthalsäure, Trimesinsäure, Pyromellitsäure.

Beispiele für Carbonsäuren der Formel IV sind:

$$HOOCCH_2CH_2OCH_2CH_2OCH_2CH_2COOH,$$

$$HOOCCH_2CH_2OCH_2CH_2CH_2OCH_2CH_2COOH,$$

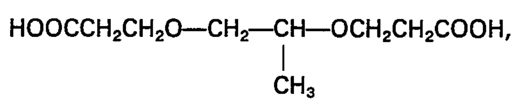

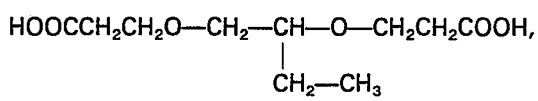

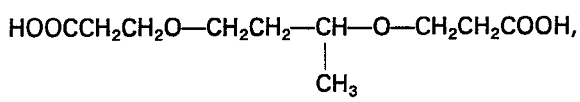

$$HOOCCH_2CH_2O—(CH_2)_4—O—CH_2CH_2COOH,$$

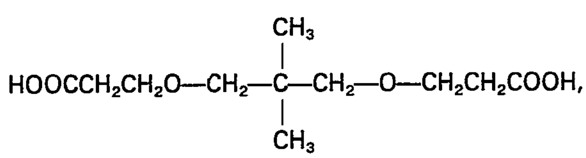

$$HOOCCH_2CH_2O-(CH_2)_6OCH_2CH_2COOH,$$

$$HOOCCH_2CH_2O-\underset{CH_3}{\underset{|}{CH}}-CH_2-CH_2-\underset{CH_3}{\underset{|}{CH}}-OCH_2CH_2COOH,$$

$$HOOCCH_2CH_2OCH_2CH_2OCH_2CH_2OCH_2CH_2COOH,$$

$$HOOCCH_2CH_2OCH_2CH_2OCH_2CH_2OCH_2CH_2OCH_2CH_2COOH,$$

$$HOOCCH_2CH_2OCH_2CH_2OCH_2CH_2OCH_2CH_2OCH_2CH_2OCH_2CH_2COOH.$$

Ganz besonders bevorzugt werden zur Umsetzung mit den Farbstoffen der Formel I die durch Oligomerisierung von Fettsäuren herstellbaren Dimer- oder Trimersäuren eingesetzt.

Für die Umsetzung mit den Farbstoffen der Formel II vorzugsweise geeignete Di- oder Polyhydroxyverbindungen entsprechen der Formel

$$[G_1']-(OH)a_1 \qquad V$$

in der

$G_1'$ einen aliphatischen Kohlenwasserstoffrest mit 2—54 C-Atomen und

$a_1$ 2, 3, 4 oder 5 bezeichnet.

Beispiele für Verbindungen der Formel V sind: 1,2-, 1,3- und 1,4-Butandiol, Neopentylglykol, 1,6- und 2,5-Hexandiol, 3-Methyl-1,5-pentandiol, 2-Methyl-2-propyl-1,3-propandiol, Octandiole (z.B. technische Gemische), Trimethyl-1,6-hexandiol (z.B. Gemische), 1,12-Octadecandiol, Glycerin, 1,1,1-Trimethylolethan, 1,1,1-Trimethylolpropan, Ethylenglykol, Propylenglykol, 1,4-Cyclohexandiol, 1,4-Cyclohexandimethanol, 2,2 -Bis-(4-hydroxycyclohexyl)-propan, Bis-hydroxymethyl-tricyclodecan ("TCD-Diol").

Auch können die Umsetzungsprodukte der Verbindungen der Formel V mit Ethylen- oder Propylenoxid eingesetzt werden.

Weitere bevorzugte Hydroxyverbindungen sind Di- oder Polyglykole mit 3—20 Ethylenoxideinheiten, Di- oder Polypropylenglykole mit 3—20 Propylenoxideinheiten sowie Mischpolymerisate aus Ethylen- und Propylenoxid sowie 1,4-Bis-(2-hydroxyethoxy)-benzol, 4,4-'-Bis-(2-hydroxyethoxy)-diphenylsulfon, 2,2-Bis-[4-(2-hydroxyethoxy)-phenyl]-propan, 1,5- 2,6-. 2,7- und 1,7-Bis-(2-hydroxyethoxy)-naphthalin.

Verestert man hydroxygruppenhaltige Pyridonazofarbstoffe der Formel I, so kann man züsatlich Di- oder Polyhydroxyverbindungen z.B. der vorstehend beschriebenen Art zusatzen, wobei man zweckmäßigerweise die Menge an Di- oder Polycarbonsäure in einem äquivalenten Umfange erhöht. Ein derartiges Verfahren führt zu einer Kettenverlängerung, wodurch anwendungstechnische Eigenschaften der Produkte z.B. Löslichkeit und Durchschlagverhalten verbessert werden können.

In analoger Weise kann man verfahren, wenn carboxylgruppenhaltige Pyridonazofarbstoffe der Formel II mit Di- oder Polyhydroxyverbindungen verestert werden, wobei man Di- oder Polycarbonsäuren der vorstehend beschriebenen Art zusetzt.

Sind in den bereits verknüpften Pyridonazofarbstoffen noch überschüssige Carboxylgruppen oder aliphatische Hydroxygruppen vorhanden, so können diese auch mit den in den vorangegangenen Abschnitten genannten Di- oder Polyolen oder Di- oder Polycarbonsäuren verestert werden, wodurch die Pyridonazofarbstoffe gegebenenfalls weiter verknüpft werden. Auch können überschüssige Carboxyl- oder Hydroxygruppen der bereits esterartig verknüpften Pyridonazofarbstoffe durch monofunktionelle Alkohole oder monofunktionelle Carbonsäuren, wie gesättigte oder ungesättigte $C_{10}$—$C_{22}$-Fettalkohole, $C_{10}$—$C_{22}$-Fettsäuren, oder Umsetzungsprodukte von Fettalkoholen mit Ethylen- oder Propylenoxid, wie sie z.B. auch als Emulgatoren und Dispergiermittel Verwendung finden, weiter verestert werden.

Bei allen genannten Veresterungen können auch Verbindungen zugesetzt werden, die sowohl eine Carboxyl- als auch eine alphatische Hydroxygruppe enthalten. Diese führen zwar zu keiner Verknüpfung, verlängern jedoch die Kette und können damit z.B. die Löslichkeit verbessern. Solche Hydroxycarbonsäuren sind z.B. Glykolsäure, Milchsäure, 3-Hydroxypropansäure, 6-Hydroxycapronsäure, Ricinolsäure, Hydroxystearinsäure, 4-(2-Hydroxyethoxy)-benzoesäure oder gegebenenfalls die Lactone, Oligomere oder Polymere dieser Verbindungen.

Die genannten Veresterungsreaktionen können selbstverständlich auch vor der Kupplung an den einzelnen Komponenten erfolgen.

Bei den Veresterungen werden die zu veresternden Hydroxy- und Carboxylgruppen haltigen Komponenten im einfactsten Fall in äquivalenten Mengen eingesetzt. Man kann jedoch auch eine oder mehrere der Komponenten im Überschuß einsetzen. Dies kann aus mehreren Gründen günstig sein:

So kann z.B. dadurch die Veresterung beschleungit werden. Unter Umständen kann damit auch erreicht werden, daß die Veresterung bezüglich einer der Komponenten möglichst quantitativ erfolgt. Das ist z.B. dan wichtig, wenn die eingesetzten hydroxy- oder carboxygruppenhaltigen Pyridonazofarbstoffe selbst noch schwerer löslich sind und erst durch Veresterung in besser lösliche Verbindungen überführt werden. Die im Überschuß eingesetzten Komponenten können auch einen Kettenabbruch bewirken und so

das Molekulargewicht der Verbindungen begrenzen. Dies kann dann wichtig sein, wenn bei der Veresterung von äquivalenten Mengen an carboxy- oder hydroxygruppenhaltigen Komponenten Verbindungen mit einem höheren Molekulargewicht und damit eventuell einer zu hohen Viskosität entstehen.

Die Veresterung selbst kann auf übliche Weise durchgeführt werden, wie es z.B. in Houben-Weyl, Methoden der organischen Chemie, 4. Auflage, Band VIII, s. 516 ff, Georg Thieme Verlag, Stuttgart 1952, beschrieben wird.

So können z.B. die Komponenten in einem geeigneten Lösungsmittel in Gegenwart eines sauren Katalysators erhitzt und das dabei entstehende Wasser azeotrop entfernt werden. Saure Katalysatoren sind beispielsweise: Schwefelsäure, Salzsäure, Chlorsulfonsäure, Phosphorsäure, Methan-, Ethan- und Butansulfonsäure, Benzol-, Toluol- und Dodecylbenzolsulfonsäure, Naphthalin-1- und -2-sulfonsäure und saure Austauscher.

Man kann die Ester auch durch Umestern herstellen. In diesem Fall geht man von Estern der hydroxy- und carboxygruppenhaltigen Komponenten mit niederen Fettsäuren und niederen Alkoholen aus, estert in bekannter Weise in Gegenwart eines Katalysators um, wobei man die nierderen Fettsäuren und Alkohole gleichzeitig durch Abdestillieren aus dem Gleichgewicht entfernt.

Es ist auch möglich, die Ester ausgehend von aktivierten Derivaten der Carbonsäuren herzustellen, beispielsweise ausgehend von Carbonsäurechloriden und Anhydriden. Besonders geeignet hierfür sind cyclische Anhydride wie z.B., Maleinsäureanhydrid, Bernsteinsäureanhydrid, Glutarsäureanhydrid, Phthalsäureanhydrid, Hexahydrophthalsäureanhydrid, 4-Methylhexahydrophthalsäureanhydrid, Tetrahydrophthalsäureanhydrid, Dodecenylbernsteinsäureanhydrid. Die Verwendung dieser Anhydride ist vor allem günstig, wenn man von einem weniger löslichen hydroxygruppenhaltigen Pyridonazofarbstoff ausgeht. Man kann zunächst den Pyridonazofarbstoff mit einem der gennanten Anhydride umsetzen, wobei in der Regel besser lösliche Produkte entstehen, die leichter weiter verestert werden können.

Weiters verknüpfte Pyridonazofarbstoffe, die erfindungsgemäß verwendet werden können, entsprechen in einer ihrer tautomerenn Formen der Formel

$$[P_{y1}]—N=N—L—N=N—[P_{y2}] \qquad VI$$

in der

$[P_{y1}]$, $[P_{y2}]$ Pyridonreste bezeichnen, die in einer ihrer tautomeren Formen der Formeln

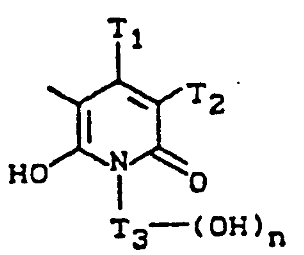

und

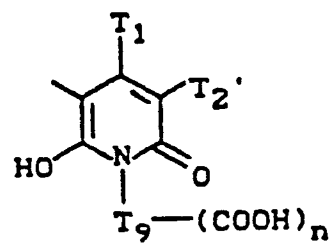

entsprechen,

in denen

$T_1$, $T_2$, $T_3$, $T_2'$, $T_9$ und n die zu den Formeln I und II angegebenen Bedeutungen haben, und

L für einen

gegebenenfalls substituierten Phenylenrest, wie m- oder p-Phenylen, oder einen Rest der Formel

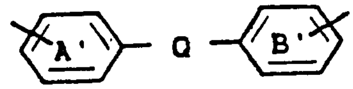

steht, wobei die Ringe A' und B' gegebenenfalls substituiert sein können, und

Q 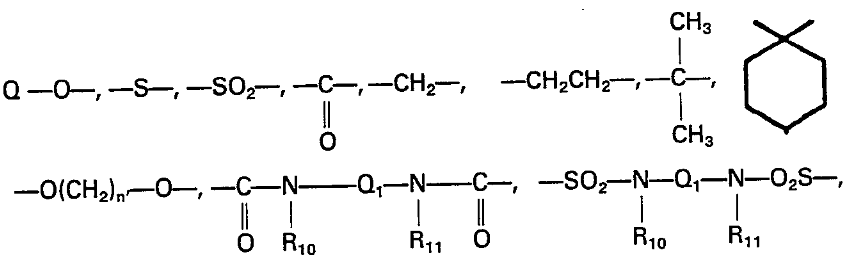

$—SO_2—O—Q_2—O—SO_2—$ oder $—O—O_2S—Q_3—SO_2—O—$ bezeichnet,

wobei

$R_{10}$, $R_{11}$ Wasserstoff, $C_1$—$C_6$-Alkyl oder $C_3$—$C_7$-Cycloalkyl bedeuten, die z.B. durch —OH, oder —CN substituiert sein können und $R_{10}$, $R_{11}$ auch zusammentreten und eine —$(CH_2)_{1-4}$— Brücke bilden können,

$Q_1$ einen gegebenenfalls substituierten Kohlenwasserstoffrest, dessen C-Kette durch ein oder mehrere nicht-nachbarständige O-Atome oder

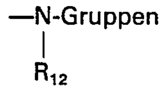

unterbrochen sein kann, wobei

$R_{12}$ Wasserstoff oder $C_1$—$C_4$-Alkyl bedeutet, das z.B. durch —OH substituiert sein kann, wobei dieser Rest sich vorzugsweise von einem $C_2$—$C_{20}$-Alkan, einem $C_3$—$C_7$-Cycloalkan, vorzugsweise Cyclohexan, einem Phenyl- oder Naphthyl-$C_1$—$C_6$-alkan, Benzol oder Naphthalin ableitet, und in der $Q_2$, $Q_3$ aromatische Reste und

n' 1, 2, 3, 4, 5 oder 6 bezeichnet.

In bevorzugten Resten

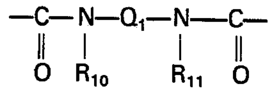

und

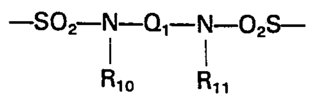 steht 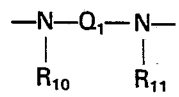

für

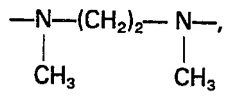, 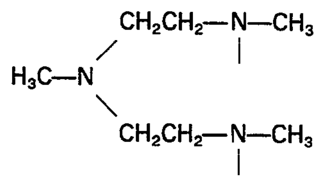

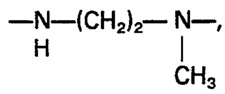, 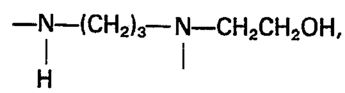,

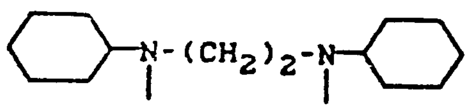, 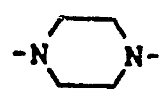,

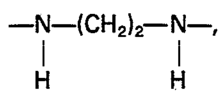, 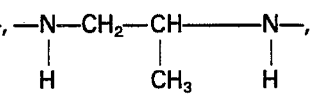, 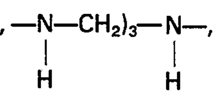,

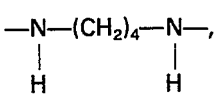, 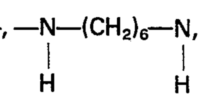, 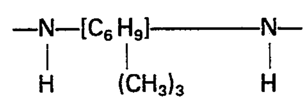 (Gemisch),

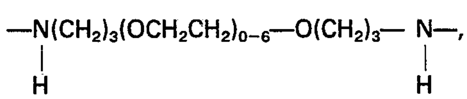, 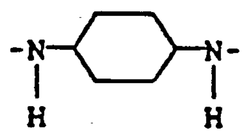,

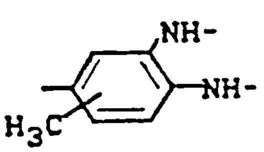, 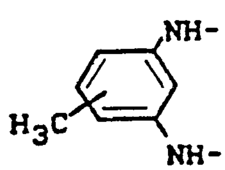, 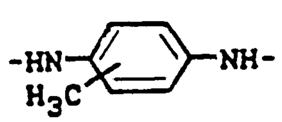,

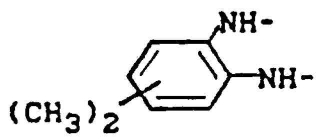 , 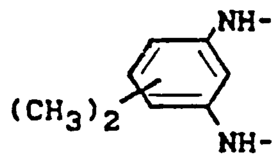 , 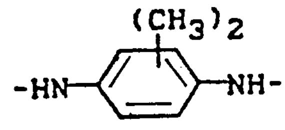 ,

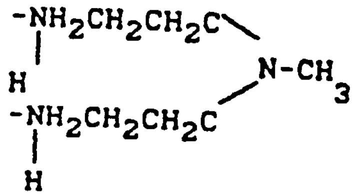 , 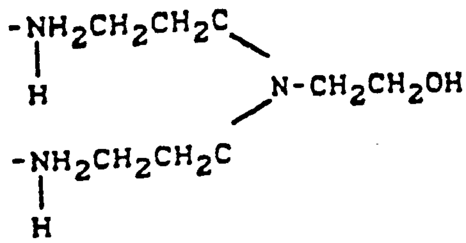 ,

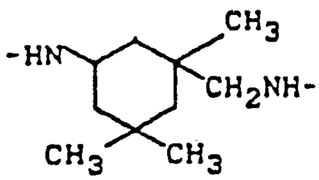 , 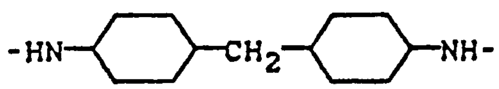 ,

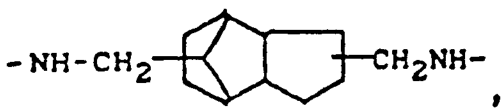 , 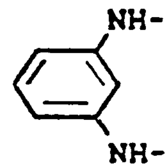 , 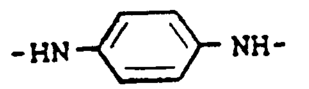 .

Bevorzugte Reste $Q_2$ sind gegebenenfalls substituierte Phenylen, gegebenenfalls substituierte Naphthylen- oder gegebenenfalls substituierte Reste der Formeln

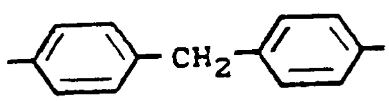 , 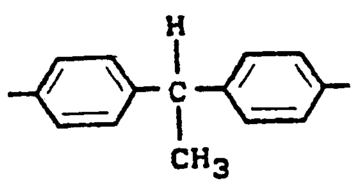 ,

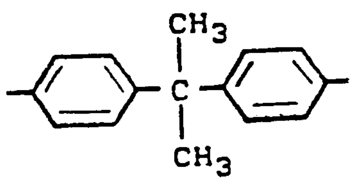 , 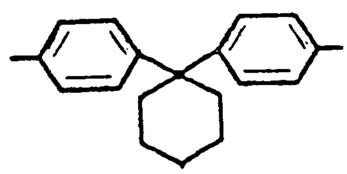

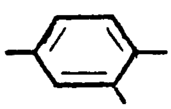 , 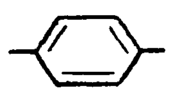 , 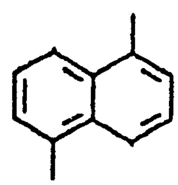 , 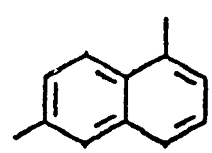 .

Bevorzugte Reste $Q_3$ sind gegebenenfalls substituierte Phenylen- oder gegenbenenfalls substituierte Naphthylen-reste.

Für $Q_3$ seien beispielhaft angeführt:

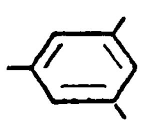 , 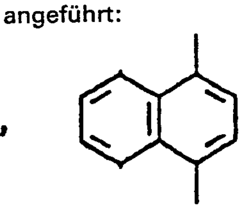 , 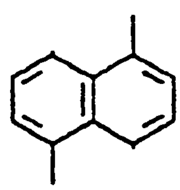 ,

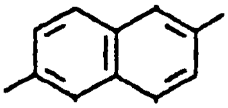 , 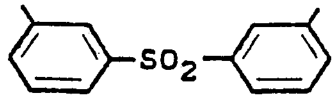

Eine weitere bevorzugte Gruppe von erfindungsgemäß einsetzbaren Verbindungen entspricht der Formel

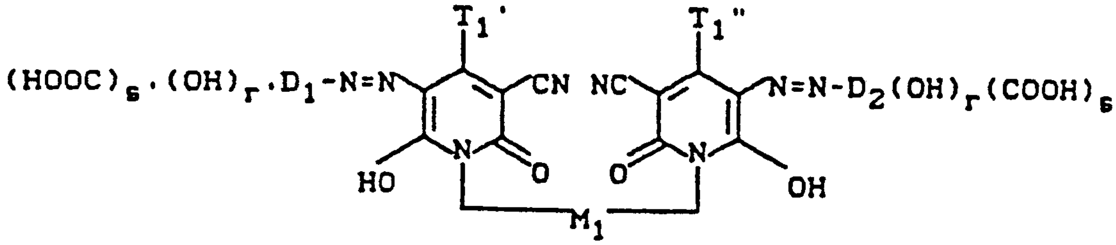

VII

in der

$D_1$, $D_2$ den Rest einer Diazokomponente

$T_1'$, $T_1''$ Alkyl, Aryl, $-COOT_4'$,

$T_4'$ Wasserstoff, Alkyl,

$M_1$ den Rest eines gegebenenfalls substituierten Kohlenwasserstoffes, dessen C-Kette durch ein oder mehrere nicht-nachbarständige O-Atome oder

$$\underset{R_{13}}{\overset{|}{-N}}\text{-Gruppen}$$

unterbrochen sein kann,

$R_{13}$ Wasserstoff oder $C_1$—$C_4$-Alkyl, das z.B durch —OH substituiert sein kann, und

r, r', s, s' 0, 1 oder 2 bezeichnen.

Bevorzugte Bedeutungen von $D_1$ und $D_2$ entsprechen den vorstehend angegebenen Vorzugsbedeutungen von D.

Zusätzlich seien als bevorzugte Diazokomponenten genannt: Diazokomponenten, die eine Gruppe $H_2N—X_1—$ enthalten wie

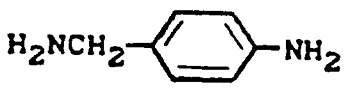

oder solche, die einen Sulfamoyl- oder Carbamoyl-Substituenten wie

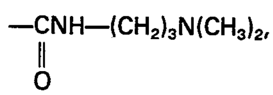, 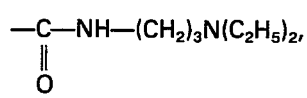,

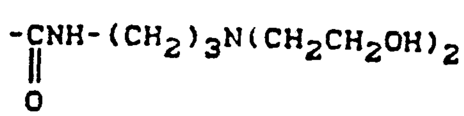, 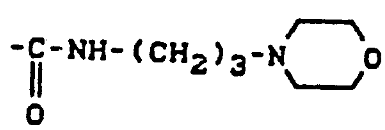 ,

$-SO_2-NH-(CH_2)_3N(CH_3)_2$, $-SO_2-NH-(CH_2)_3N(C_2H_5)_2$,

$-SO_2-NH-(CH_2)_3N(CH_2CH_2OH)_2$, 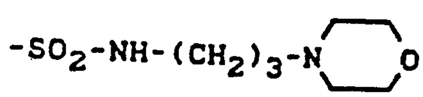

enthalten.

Die Pyridonazofarbstoffe der Formeln VI und VII können, sofern sie freie —OH oder —COOH-Gruppen enthalten, mit Di- oder Polyolen oder Di- oder Polycarbonsäuren verestert werden, wodurch der Verknüpfunsgrad erhölt und die Löslichkeit verbessert werden kann.

Die Veresterung kann im Prinzip wie die vorstehend bereits beschriebene Veresterung der Verbindungen der Formeln I und II erfolgen.

Insbesondere können auch die Farbstoffe der Formeln VI und VII, da sie bereits verknüpft sind, durch monofunktionelle Alkohole oder monofunktionelle Carbonsäuren wie gesättigte oder ungesättigte $C_{10}$—$C_{22}$-Fettalkohole, $C_{10}$—$C_{22}$-Fettsäuren oder Umsetzungsprodukte von Fettalkoholen mit Ethylen- oder Propylenoxid verestert werden.

Eine weitere bevorzugte Gruppe von erfindungsgemäß einsetzbaren Farbstoffen entspricht der Formel

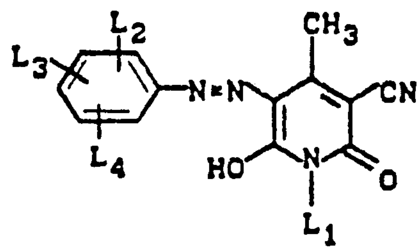

VIII

in der

$L_1$ gegebenenfalls substituiertes $C_{12}$—$C_{22}$-Alkyl, gegebenenfalls substituiertes $C_{12}$—$C_{22}$-Alkenyl, $-L_5-O-L_6$,

$$-L_5-O-\overset{\overset{\displaystyle O}{\|}}{C}-L_6,\ -CH_2CH_2O(CH_2CH_2O)_tL_7,$$

$$-CH_2CH_2O(CH_2CH_2O)_t\overset{\overset{\displaystyle O}{\|}}{C}-L_{7'},\ -CH_2CH_2CH_2O(CH_2CH_2O)_tL_7,$$

$$-CH_2CH_2CH_2O(CH_2CH_2O_t)-\overset{\overset{\displaystyle O}{\|}}{C}-L_{7'},\ -L_8COOL_9,$$

$L_5$ $C_2$—$C_{12}$-Alkylen,
$L_6$ $C_2$—$C_{22}$-Alkyl, $C_2$—$C_{22}$-Alkenyl,
$L_7$ Wasserstoff, $C_1$—$C_{22}$-Alkyl, $C_2$—$C_{22}$-Alkenyl, gegebenenfalls substituiertes Phenyl,
$L_8$ $C_1$—$C_{12}$-Alkylen,
$L_7'$ $C_1$—$C_{22}$-Alkyl, $C_2$—$C_{22}$-Alkenyl, gegebenenfalls substituiertes Phenyl,
$L_9$ Wasserstoff, $C_1$—$C_{22}$-Alkyl oder $C_2$—$C_{22}$-Alkenyl,
t 0, 1, 2, 3, 4, 5,
$L_2$ Wasserstoff, Halogen wie F, Cl, Br, $C_1$—$C_{22}$-Alkyl, Cyclopentyl, Cyclohexyl, Cyclopentenyl, Cyclohexenyl, Aralkyl, insbesondere Phenyl-$C_1$—$C_4$-alkyl und Naphthyl-$C_1$—$C_4$-alkyl, $-CF_3$, $-NO_2$, —CN, $C_1$—$C_4$-Alkoxy, $C_1$—$C_4$-Alkoxycarbonyl, Mono, und Di-$C_1$—$C_8$-alkyl-carbamoyl, Mono- und Di-$C_1$—$C_8$-alkyl-sulfamoyl,
$L_3$ Wasserstoff, Halogen wie F, Cl, Br, —CN, $C_1$—$C_4$-Alkyl, $C_1$—$C_4$-Alkoxy, $C_1$—$C_4$-Alkoxycarbonyl und
$L_4$ Wasserstoff und $C_1$—$C_4$-Alkyl bezeichnen,
Die $C_{12}$—$C_{22}$-Alkyl- und $C_{12}$—$C_{22}$-Alkenylreste
$L_1$ können z.B. durch —OH oder $C_1$—$C_{22}$-Alkoxy oder $C_3$—$C_{22}$-Alkenyloxy substituiert sein.

Bevorzugt enthält $L_1$ in Formel VIII mindestens 12, besonders bevorzugt mindestens 18 C-Atome.

Die Farbstoffe der Formel VIII sind bekannt oder können in Analogie zu literaturbekannten Verfahren hergestellt werden (siehe z.B. DE—OS 2 216 207, DE—OS 3 111 648, DE—OS 3 012 863).

Eine wertvolle Eigenschaft der Farbstoffe der Formel VIII ist, daß die Farbtöne im allgemeinen in dem für den Drei- oder Vierfarbendruck gewünschten Bereich liegen.

Die Erfindung betrifft weiterhin neue Farbstoffe, die dadurch erhältlich sind, daß man Farbstoffe der Formel I mit Di- oder Polycarbonsäuren unter esterartiger Verknüpfung von mindestens zwei gleichen oder verschiedenen Farbstoffen der Formel I umsetzt.

Die Erfindung betrifft weiterhin neue Farbstoffe, die dadurch erhältlich sind, daß man Farbstoffe der Formel II mit Di- oder Polyhydroxyverbindungen inter esterartiger Verknüpfung von mindestens zwei gleichen oder verschiedenen Farbstoffen der Formel II umsetzt.

Die Erfindung betrifft weiterhin neue Farbstoffe der Formel

$$[P_{y1}]-N=N-L'-N=N-[P_{y2}] \qquad IX,$$

in der

$[P_{y1}]$, $[P_{y2}]$ die zu Formel VI angegebenen Bedeutungen haben und
L' für

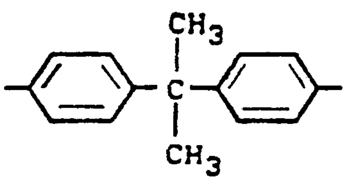
,
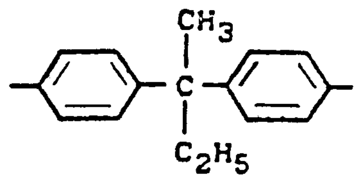
,

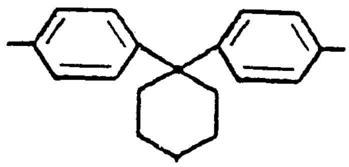
,
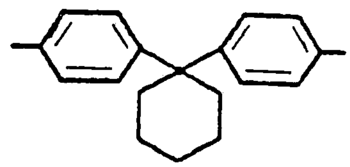

steht,
wobei die Phenylen, Cyclopentylen und Cyclohexylenreste z.B. durch $C_1$—$C_4$-Alkyl und die Phenylenreste außerdem durch —$NO_2$ und Cl substituiert sein können.

Die Herstellung der Farbstoffe der Formeln I, II, VI, VII, VIII und IX erfolgt nach oder in Analogie zu literaturebekannten Verfahren (siehe z.B. DE—OS 2 216 207, DE—OS 3 111 648, DE—OS 3 012 863, DE—OS 2 152 536, US—PS 4 476 318).

Für den Fall, daß die vorstehend genannten Pyridonazofarbstoffe noch aliphatische Aminogruppen enthalten, können die Farbstoffe zur Erhöhung der Löslichkeit mit geeigneten Säuren zu Salzen umgesetzt werden. Als geeignete Säuren kommen in Frage: Gesättigte oder ungesättitge $C_8$—$C_{22}$-Fettsäuren; Harzsäuren wie Abitiensäure oder deren Umsetzungsprodukte mit Malein- oder Fumarsäure; dimerisiert oder trimerisierte Fettsäuren, $C_{10}$—$C_{20}$-Alkansulfonsäuren, Dodecylbenzolsulfonsäuren, Phosphorsäuremono- oder -di-ester von Fettalkoholen.

Analog kann man auch solche der vorstehend gennanten Pyridonazofarbstoffe, die noch freie Carbonsäuregruppen enthalten, mit Aminen in Salze überführen.

Geeignete Amine sind beispielsweise: Dicyclohexylamin, gesättigte oder ungesättigte $C_{10}$—$C_{22}$-Fettalkylamine oder Difettalkylamine, Fettalkylpropylendiamine, Abietylamine oder die Umsetzungsprodukte dieser Amine mit Alkylenoxidin, z.B. Ethylenoxid und Propylenoxid.

Bevorzugte Verwendung bei der Herstellung von Illustrationstiefdruckfarben finden solche Verbindungen der Formeln I, II, VI, VII, VIII und IX bzw. deren Veresterungsprodukte, bei denen der Massenanteil am Farbstoffmolekül derjenigen Kohlenwasserstoffreste, die nicht unmittelbar an die Azogruppe gebunden sind, wenigstens 20%, bevorzugt wenigstens 25%, besonders bevorzugt wenigstens 30%, beträgt.

Die Berechnung zur Auswahl dieser Verbindungen sei an zwei Beilspielen erläutert:

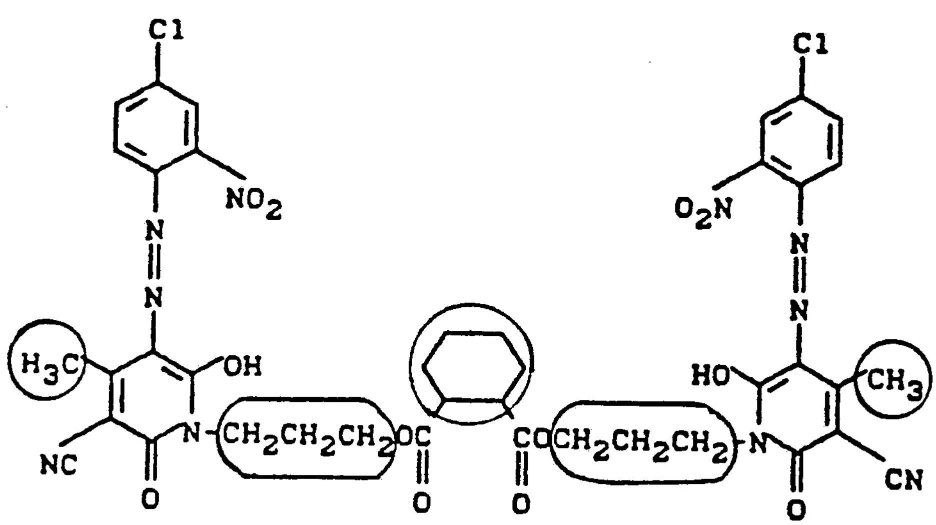

β)

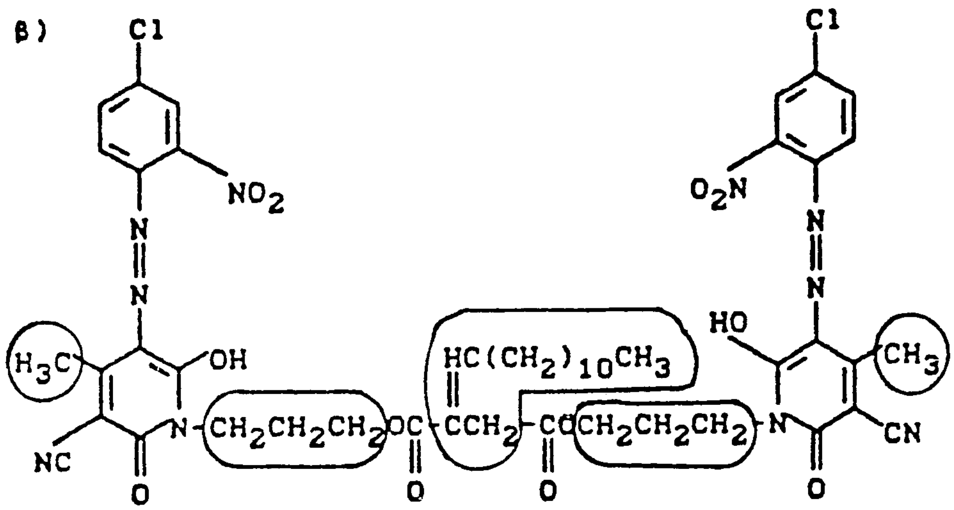

In den Formel α) und β) wurden die nicht unmittelbar an die Azogruppe gebundenen Kohlenwasserstoffreste markiert.

In Formel α) beträgt der Massenanteil dieser Substituenten and der Gesamtmasse des Moleküls 21,4% und in Formel β) 32,2%.

Die unter Verwendung der Pyridonazofarbstoffe hergestellten Illustrationstiefdruckfarben enthalten, bezogen auf das Gewicht der Komponenten A), B) und C), vorzugsweise.

A) etwa 2 bis etwa 20 Gew.-% Farbmittel,

B) etwa 10 bis etwa 40 Gew.-% Harz und

C) etwa 80 bis etwa 50 Gew.-% Lösungsmittel,

sowie gegebenenfalls weitere Zusätze.

Das Farbmittel kann auch ein Gemisch verschiedener der vorstehend genannten Pyridonazofarbstoffe, ein Gemisch von mindestens einem dieser Pyridonazofarbstoffe mit einem anderen, für den Illustrationstiefdruck geeigneten Farbstoff sowie insbesondere auch ein Gemisch aus mindestens einem der vorstehend genannten Pyridonazofarbstoffe und mindestens einem für Illustrationstiefdruckfarben geeigneten Pigment sein. Die letztgenannten Mischungen Können bis zu 90 Gew.-%, bevorzugt bis zu 50 Gew.-% Pigment enthalten. Mischungen der Pyridonazofarbstoffe untereinander werden oft bereits dadurch erhalten, daß man bei der Herstellung Naturprodukte oder aus Naturproduktion hergestellte Komponenten, die erfahrungsgemäß als Mischungen vorliegen, einsetzt oder aber Komponenten, die als Gemisch von Stereoisomeren vorliegen. Man kann den Mischungsanteil aber auch dadurch erhöhen, daß man fertige Produkte mischt oder bei der Herstellung Mischungen von Komponenten einsetzt, so z.B. Mischungen von Pyridonazofarbstoffen, wie sie durch Mischkupplungen entstehen. Diese Mischungen haben den Vorteil, daß sie oft leichter löslich sind als die reinen Komponenten.

Bei Pigmenten, die sich zur Herstellung von Mischungen der genannten Pyridonazofarbstoffe mit Pigmenten eignen, handelt es sich bevorzugt um Gelbpigmente, z.B. C.I. Pigment Yellow 12, 13, 14, 17, 74 und 83. Daneben kommen zur Erzeugung von besonderen Nuancen auch Mischungen mit Pigmenten mit anderem Farbton in Frage, z.B. C.I. Pigment Orange 5, und 34; C.I. Pigment Red 2, 53, 57:1, 112, 122, 146, 148; C.I. Pigment Violet 19; C.I. Pigment Blue 15 und 27; C.I. Pigment Green 7 und 36 sowie C.I. Pigment Black 7. Die Pyridonazofarbstoffe können auch zum Nuancieren der genannten Pigmente verwendet werden.

Geeignete Harze sind z.B. Calciumresinate, Zinkresinate, phenolmodifizierte Kolophoniumharze, Chlorkautschuk, Calciumsalze von dimerisiertem Kolophonium, synthetische Kohlenwasserstoffharze.

Als Lösungsmittel kommen vorzugsweise Benzin, insbesondere Leichtbenzinsorten, Xylol und besonders bevorzugt Toluol in Betracht.

Somit betrifft die vorliegende Erfindung bevorzugt die Herstellung von Illustrationstiefdruckfarben auf Toluol- basis.

Zür Herstellung der Illustrationstiefdruckfarben werden die Pyridonazofarbstoffe, gegebenenfalls im Gemisch mit Pigmenten, in üblicher Weise in die Druckfarbenansätze eingearbeitet.

Vorteilhafterweise können beim erfindungsgemäßen Verfahren zur Herstellung von Illustrationstiefdruckfarben dem Pyridonazofarbstoff feindisperse anorganische Zuchlagstoffe mit einer spezifische Oberfläche nach BET von mindestens 50 $m^2/g$, bevorzugt mindestens 100 $m^2/g$, besonders bevorzugt mindestens 200 $m^2/g$ zugesetzt werden.

Als Zuschlagstoffe haben sich insbesondere Aluminiumhydroxide und ganz besonders Kieselsäure bewährt.

Die Zuschlagstoffe wurden vorzugsweise in Mengen von 0,2—2 Gew.-%, bezogen auf des Druckfarbengewicht, besonders bevorzugt 0,4—0,9 Gew.-% eingesetzt.

Durch diese Zusätze gelingt es, die Durchschlagsneigung der Farbstoffe weiter zu verringern, wobei

Ergebnisse erzielt werden, wie sie sonst nur bei der alleinigen Verwendung von Pigmenten erreicht werden können.

Bie den vorzugsweise eingesetzten feindispersen Kieselsäuren handelt es sich um überwiegend amorphe, mehr oder weniger vernetzte, feinteilige Kieselsäuren mit der o.a. spezifischen Oberflächen. Solche Kieselsäuren sind z.B. aus Ullmanns Encyklopädie der technischen Chemie. 4. Auflage, Band 21, S. 451—476, bekannt.

Die Kieselsäuren können z.B. durch Fällung aus Lösungen oder nach pyrogenen Verfahren erhalten werden; sie können neben überwiegend Kieselsäure auch noch andere Metalloxide und -hydroxide enthalten, z.B. solche des Aluminiums und Titans.

Die Kieselsäuren müssen in der Tiefdruckfarbe dispergiert sein. Diese Dispergierung kann in der fertigen Tiefdruckfarbe oder in einem Konzentrat enfolgen. Es ist jedoch auch möglich, zunächst eine Dispersion in dem für die Triefdruckfarbe verwendeten Lösungsmittel gegebenenfalls auch in höherer Konzentration herzustellen, wobei man bereits einen Teil oder auch das gasamte Harz zusetzen kann. Geeignete Dispergieraggregate sind z.B.: Rührer, Schnellrührer, Dissolver, Perlmühlen und Kugelmühlen oder eine Kombination dieser Aggregate.

Weiterhin kann es vorteilhaft sein, zusätzlich zu den Kieselsäuren noch Netz- und Dispergiermittel für diese zuzusetzen. Besonders geeignete Dispergiermittel sind die Salze starker organophiler Säuren mit aliphatischen Aminen und Polyaminen, die gegebenenfalls Hydroxylgruppen enthalten.

Starke organophile Säuren sind z.B.: $C_{10}$—$C_{20}$-Alkansulfonsäuren, Alkylarylsulfonsäuren wie Dodecylbenzolsulfonsäure, Di-tert,-butylnaphthalinsulfonsäuren, Schwefelsäuremonoeter oder Phosphorsäuremono oder -diester von Alkanolen oder deren Umsetzungsprodukten mit Ethylenoxid oder Propylenoxid.

Solche Alkanole sind z.B. gesättigte oder ungesättigte, geradkettige oder Verzweigte $C_4$—$C_{22}$-aliphatische Alkohole wie Butanol, 2-Ethylhexanol, Dodecanol, Tetra-, Hexa- und Octadecylalkohol, Oleylalkohol sowie die Umsetzungsprodukte dieser Alkohole mit 1—20 mol Ethylen- oder Propylenoxid.

Geeignete aliphatische Amine sind z.B.: Ethylendiamin, Amine der Formel $H_2N(CH_2CH_2NH)_nH$, mit n = 2—6, Propylendiamin, Dipropylendiamin, Talgfettpropylendiamin. Als hydroxylgruppenhaltige Amine kommen z.B. solche in Frage, wie sie bei der Umsetzung von Ammoniak oder $C_1$—$C_{20}$-Alkylmono- -di- oder -polyaminen mit Ethylen- oder Propylenoxid oder mit Epichlorhydrin entstehen.

Beispiele hierfür sind: Ethanolamin, Di- und Triethanolamin, Tris-[2-(2-hydroxyethoxy)-ethyl]-amin, Bis-(2-hydroxyethyl)-methyl-, -ethyl, -propyl oder -butylamin, 2-(2-Aminoethylamino)-ethanol, 2-(Hydroxyethyl)-bis-(2-hydroxypropyl)-amin, Tris-(2-hydroxypropyl)-amin, 3-[Bis-(2-hydroxethyl)-amino]-propylamin, Pentahydroxyethyl-diethylentriamin, 2,3-Dihydroxypropylamin; die Umsetzungprodukte von Kokosfettsäuren, Talgfettamin, Stearylamin und Oleylamin mit 2 mol Ethylenoxid oder von Talgfettpropyllendiamin mit 3 mol Ethylenoxid.

Diese Dispergiermittel werden in Mengen zwischen 10 und 200 Gew.-%, bevorzugt 50 und 100 Gew.-%, bezogen auf die Kieselsäure, zugesetzt.

Als weitere feindisperse Zusatzstoffe kommen z.B. feindisperse Aluminiumhydroxide oder die weitgehend röntgenamorphen Aluminiumhydroxidgele in Frage, wie sie z.B. durch Fällen aus sauren Aluminiumsalzlösungen mit Basen oder nach dem Verfahren der Flammenhydrolyse erhalten werden können.

Bevorzugte Aluminiumhydroxide haben eine spezifische Oberfläche nach BET von wenigstens ca. 50 $m^2/g$. Sie können auf gleiche Weise und unter Zusatz der gleichen Dispergiermittel dispergiert werden wie es vorstehend für die Kieselsäuren beschrieben wurde. Auch Mischungen aus feindispersen Aluminiumhydroxiden und Kieselsäuren können erfindungsgemäß verwendet werden.

Das Eindringen und/oder Durchschlagen einer Druckfarbe kann man prüfen, indem man das Durchscheinen oder Durchschlagen eines Druckes oder Aufstriches der Druckfarbe auf dem Bedruckstoff, z.B. einem Druckpapier von der Rückseite visuell oder farbmetrisch beurteilt.

Das Durchschlagen fällt besonders ins Gewicht bei den zunehmend verwendeten preiswerten Papierqualitäten mit einem Papiergewicht von 42 $g/m^2$ oder weniger.

Die erfindungsgemäßen neuen Farbstoffe können darüberhinaus zum Färben von Oberflächenbelägen, weiteren organischen Lösungsmitteln und Mineralölprodukten Verwendung finden, weil sie sich durch eine unerwartet hohe Löslichkeit in diesen Medien auszeichnen.

Einzelnen Substrate, die mit den neuen Pyridonazofarbstoffen gefärbt werden können, sind z.B. Druckfarben auf Basis von Estern, Ketonen, Glykolen, Glykolethern und Alkoholen, wie Essigsäureethylester, Essigsäurebutylester, Essigsäuremethoxyethylester, Aceton, Methylethylketon, Methylglykol, Methyldiglykol, Butyldiglykol, Ethanol, Propanol, Butanol, Phthalsäurebutylester und Phthalsäureethylester, oder Schreibtinten, Heiz- und Dieselöle sowie allgemein organische Lösungsmittel.

Insbesondere können die neuen Farbstoffe auch zur Herstellung von Flexo- und Verpackungstiefdruckfarben dienen, gegebenenfalls auch in Mischung mit Pigmenten.

Dabei können die neuen Farbstoffe auch in den beschriebenen Zubereitungen, enthaltend einen feindispersen anorganischen Zusatzstoff, eingesetzt werden.

In der US—PS 3 971 741 werden wasserunlösliche Polyazofarbstoffe der Formel X (OOC—D—N—N—K)$_m$ und deren Verwendung für Druckfarben beschrieben, wobei K = Kupplungskomponente, x = aliphatischer Rest, der frei von OH-Gruppen ist, D = aromatisch-carbocyclischer oder aromatisch-heterocyclischer Rest und m = 2 oder 3.

Beispiel 1

37,1 g (0,1 mol) eines auf übliche Weise durch Diazotieren und Kuppeln erhaltenen Farbstoffes der Formel I:

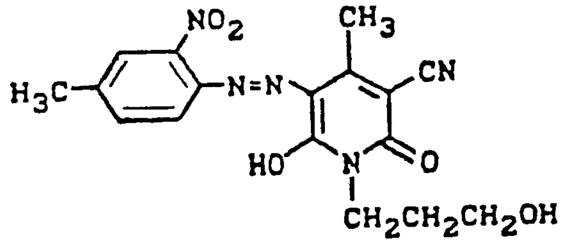

(I)

31,9 g Pripol 1010, einer handelsüblichen, dimerisierten Fettsäure der Firma Unichema mit einer Säurezahl von ca. 195, 200 ml Toluol und 1 g Methansulfonsäure werden 7 Std. unter Rückfluß erhitzt und dabei das bei der Veresterung entstehende Wasser in einem Wasserabscheider abgeschieden. Während der letzten zwei Stunden werden nach und nach ingesamt 100 ml Toluol abdestilliert, wobei die Temperatur bis auf ca. 130°C steigt. Danach ist im Dünnschicht-chromatogramm kein unveresterter Farbstoff mehr nachweisbar. Die Lösung wird mit 50 ml Toluol verdünnt, eine geringe Menge eines ungelösten Rückstandes abgesaugt und mit wenig Toluol nachgewaschen. Man erhält 230 g einer klaren gelben Lösung.

18 g dieser Lösung, 51 g einer 50 %igen Lösung in Toluol von Alsynol KZ 71, einem handelsüblichen Kohlenwasserstoffharz der Firma Synres und 36 g Toluol werden gemischt. Die so erhaltene Tiefdruckfarbe besitzt eine Viskosität, die einer Auslaufzeit von 23 Sekunden im DIN 3 Becher nach DIN 53 211 entspricht. Mit dieser Druckfarbe werden auf einem Dürner Tiefdruck Handandruckgerät Tiefdruckpapiere bedruckt, wobei sehr farbstarke gelbe Drucke erhalten werden.

Ein ähnliches Ergebnis erzielt man, wenn man eine Druckfarbe bestehend aus 21,6 g der Farbstofflösung, 49,9 g Toluol und 28,5 g Erkazit 899, einem Calciumresinat der Firma Lackharzwerke Robert Krämer, einsetzt.

Beispiel 2

Man stellt analog zu Beispiel 1 eine Druckfarbe here, die aus 18 g der Farbstofflösung nach Beispiel 1, 50 g einer 50 %igen Lösung von Alsynol KZ 71, 19 g Toluol und zusätzlich 16 g einer 5 %igen Dispersion von Aerosil 380, einer handelsüblichen feindispersen Kieselsäure mit einer spezifischen Oberfläche nach BET von ca. 380 $m^2$/g (Herst.: Degussa) im Toluol besteht. Man erhält eine Druckfarbe von gleicher Viskosität und mit ähnlichen Eigenschaften wie nach Beispiel 1. Das Durchschlagverhalten ist auch beim Bedrucken von Papieren mit sehr niedrigem Flächengewicht einwandfrei.

Ähnliche Ergebnisse erhält man, wenn an Stelle von Aerosil 380 Aerosil 300, (handelsübliche feindisperse Kieselsäure mit einer spezifischen Oberflache nach BET von ca. 300 $m^2$/g (Herst.: Degussa)) Aerosil 200 (handelsübliche feindisperse Kieselsäure mit einer spezifischen Oberfläche nach BET von ca. 200 $m^2$/g (Herst.: Degussa)) oder HDK T 40, einer feindispersen Kieselsäure der Firma Wacker Chemie, eingesetzt werden.

Beispiel 3

Man verfahrt wie bei Beispiel 1, setzt jedoch anstelle der dimerisierten Fettsäure 33,1 g Pripol 1040, einer handelsüblichen, trimerisierten Fettsäure der Firma Unichema, ein. Man erhält eine Lösung, die als wesentlichen gelösten Bestandteil einen über die trimerisierte Fettsäure dreifach verknüpften Pyridonazofarbstoff der in Beispiel 1 angegebenen Formel enthält. Daraus analog den Beispielen 1 und 2 hergestellte Druckfarben zeigen gleich gute Eigenschaften.

Beispiel 4

37,1 g (0,1 Mol) eines Pyridonazofarbstoffes der in Beispiel 1 angegebenen Formel, 200 ml Toluol und 50,4 g (0,3 Mol) 4-Methylhexahydrophthalsäureanhydrid werden 1 Stunde unter Rückfluß erhitzt, wobei alles in Lösung geht. Anschließend gibt man 1 g Methansulfonsäure und 32,2 g (0,24 Mol) eines Dipropylenglykolgemisches hinzu und erhitzt weiterhin unter Rückfluß, wobei man das sich bildende Veresterungswasser mit Hilfe eines Wasserabscheiders abtrennt. Nach ca. 1 Stunde wird soviel Toluol abdestilliert, daß die Temperatur ca. 130°C erreicht, und noch weitere 8 Stunden erhitzt. Man verfährt weiter wie bei Beispiel 1 und erhält 265 g einer Lösung, die einen über oligomere Ester aus 4-Methylhexahydrophthalsäureanhydrid und Dipropylenglykol verknüpften Pyridonazofarbstoff der in Beispiel 1 angegebenen Formel enthält. Daneben sind wahrscheinlich noch oligomere Ester aus 4-Methylhexahydrophthalsäure und Dipropylenglykol vorhanden. Eine analog zu Beispiel 1 hergestellte Druckfarbe zeigt ein noch besseres Durchschlagverhalten als eine Druckfarbe nach Beispiel 1. Analog zu Beispiel 2 unter Zusatz von feindispersen Kieselsäuren hergestellte Druckfarben ergeben zu den Druckfarben nach Beispiel 2 vergleichbare Ergebnisse.

Analog zu den in den Beispielen 1—4 angegebenen Verfahren wurden aus den in der Tabelle 1 aufgeführten Pyridonazofarbstoffen der folgenden allgemeinen Formal A durch Verestern mit den in der Tabelle 2 angegebenen Carbonsäuren, Carbonsäureanhydriden und Alkoholen in den dort angegebenen Mengen verknüpfte Pyridonazofarbstoffe hergestellt:

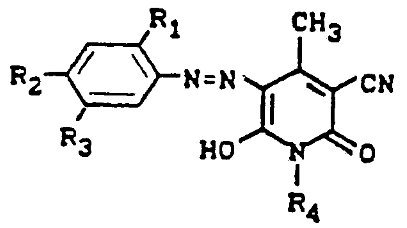

A

TABELLE 1

| Farbstoff | $R_1$ | $R_2$ | $R_3$ | $R_4$ |
|---|---|---|---|---|
| I | $NO_2$ | $CH_3$ | H | $—CH_2CH_2CH_2OH$ |
| II | ″ | ″ | ″ | $—CH_2CH(OH)CH_3$ |
| III | ″ | ″ | ″ | $—CH_2CH_2OCH_2CH_2OH$ |
| IV | ″ | ″ | ″ | $—CH_2CH_2OH$ |
| V | $NO_2$ | Cl | ″ | $—CH_2CH_2OCH_2CH_2OH$ |
| VI | $NO_2$ | Cl | H | $—CH_2CH(OH)CH_3$ |
| VII | H | Cyclohexyl | ″ | $—CH_2CH_2OH$ |
| VIII | ″ | ″ | ″ | $—CH_2CH_2OCH_2CH_2OH$ |
| IX | ″ | ″ | ″ | $—CH_2CH_2CH_2OH$ |
| X | ″ | tert.Butyl | ″ | $—CH_2CH_2OCH_2CH_2OH$ |
| XI | ″ | ″ | ″ | $—CH_2CH_2CH_2OH$ |
| XII | $NO_2$ | ″ | ″ | $—CH_2CH_2CH_2OH$ |
| XIII | $CH_3$ | $NO_2$ | ″ | $—CH_2CH_2OCH_2CH_2OH$ |
| XIV | H | 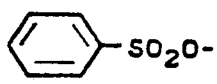 | ″ | $—CH_2CH_2CH_2OH$ |
| XV | $NO_2$ | $OCH_3$ | ″ | $—CH_2CH_2CH_2OH$ |
| XVI | $CH_3$ | $CH_3$ | $CH_3$ | $—CH_2CH_2CH_2OH$ |
| XVII | $OCH_3$ | H | $—SO_2N(CH_2CH_2OH)_2$ | $—CH_2CH(C_2H_5)(CH_2)_3CH_3$ |
| XVIII | ″ | ″ | ″ | $—CH_2CH_2CH_2OH$ |
| XIX | H | $CH_3$ | Cl | $—CH_2CH_2CH_2OH$ |
| XX | H | $—OCH_2CH_2OH$ | ″ | $—CH_2CH_2CH_2OH$ |
| XXI | $NO_2$ | $CH_3$ | H | $—(CH_2)_5COOH$ |
| XXII | ″ | ″ | ″ | $—(CH_2)_{10}COOH$ |
| XXIII | ″ | Cl | ″ | $—(CH_2)_5COOH$ |
| XXIV | H | $—OCH_2COOH$ | ″ | $—CH_2CH(C_2H_5)(CH_2)_3CH_3$ |
| XXV | H | $CH_3$ | ″ | $—CH_2CH_2OCH_2CH_2OH$ |
| XXVI | H | $CH_3$ | ″ | $—CH_2CH_2COOH$ |

Weitere in der Tabelle 2 aufgeführte Veresterungsprodukte von Pyridonazofarbstoffen wurden ausgehend von Pyridonazofarbstoffen der folgenden Formeln XXVII—XXIX hergestellt:

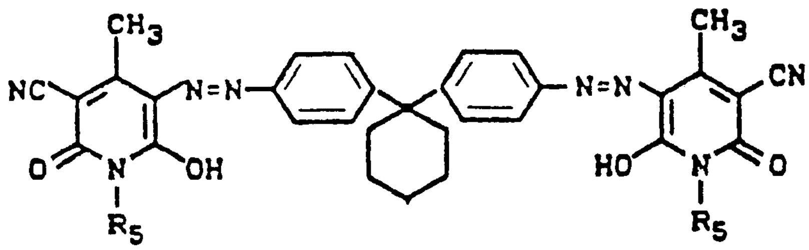

XXVII: $R_5$ = $(CH_2)_5COOH$

XXVIII: $R_5$ = $-CH_2CH_2OCH_2CH_2OH$

XXIX: $R_5$ = $-CH_2CH_2CH_2OH$

TABELLE 2

In der Spalte C wird die pro Mol Farbstoff eingesetzte Menge an Carbonsäure oder Carbonsäureanhydrid angegeben.

In der Spalte A wird die pro Mol Farbstoff eingesetzte Menge an Alkohol angegeben.

| Bsp. | Farb-stoff | C | Carbonsäure oder Carbonsäure-anhydrid | A | Alkohol |
|---|---|---|---|---|---|
| 5 | I | 3 | 4-Methylhexahydrophthalsäure anhydrid ("MHPA") | 2,4 | 1,2-Bis-(hydroxyethoxy)-ethan |
| 6 | I | 3 | Phthalsäureanhydrid | 2,4 | 1,6-Hexandiol |
| 7 | I | 3 | " | 2,4 | Polyglykol P 400 |
| 8 | I | 2 | Dodecandisäure | 1,2 | Bis-hydroxymethyl-tri-cyclodecan ("TCD-Diol") |
| 9 | II | 2 | " | 1,4 | " |
| 10 | II | 3 | MHPA | 2,4 | 1,6-Hexandiol |
| 11 | III | 3 | " | 2,4 | 1,2-Bis-(hydroxyethoxy)-ethan |
| 12 | III | 1,1 | Erucasäure | — | — |
| 13 | III | 3 | MHPA | 2,4 | 1,6-Hexandiol |
| 14 | III | 0,55 | Pripol 1010 | — | — |
| 15 | III | 3 | MHPA | 2 | Dipropylenglycol (Gemisch) |
| 16 | III | 3 | " | 2,2 | " |
| 17 | III | 3 | " | 2,4 | " |
| 18 | III | 2 | Dodecenylbernsteinsäureanhydrid (Fibran) | 1,2 | 1,12-Octadecandiol |
| 19 | III | 2 | " | 1,4 | " |
| 20 | III | 2 | Dodecandisäure | 1,4 | TCD-Diol |

TABELLE 2 (Fortsetzung)

| Bsp. | Farbstoff | C | Carbonsäure oder Carbonsäureanhydrid | A | Alkohol |
|---|---|---|---|---|---|
| 21 | III | 1,5 | Fibran | — | — |
| 22 | IV | 1,5 | Phthalsäureanhydrid | 1,2 | 1,6-Hexandiol |
| | | 1,5 | MHPA | 1,2 | Polyglykol P 400 |
| 23 | V | 1,1 | Erucasäure | — | — |
| 24 | V | 0,33 | Pripol 1040 | — | — |
| 25 | V | 0,55 | Pripol 1010 | | |
| 26 | VI | 2 | Dodecandisäure | 1,1 | TCD-Diol |
| 27 | VII | 0,55 | Pripol 1010 | — | — |
| 28 | VII | 1 | " | 1,4 | 1,4-Bis-(2-hydroxyethoxy)-benzol |
| 29 | VIII | 2 | MHPA | 1,6 | 1,1,1-Trimethylolethan |
| | | 1 | Dodecandisäure | | |
| 30 | VIII | 1,1 | Pripol 1010 | 0,5 | 4,4′-Bis-(2-hydroxyethoxy)-diphenylsulfon |
| 31 | VIII | 0,55 | Pripol 1040 | 0,22 | " |
| 32 | VIII | 1,1 | Pripol 1010 | 0,5 | N,N′-Bis-(2-hydroxyethoxy)-benzolsulfonamid |
| 33 | VIII | 0,5 | Pripol 1040 | 0,22 | 1,1,1-Trimethylolethan |
| 34 | VIII | 0,75 | Fibran | — | — |
| 35 | IX | 0,5 | " | — | — |
| 36 | X | 1 | " | 0,4 | TCD-Diol |
| 37 | X | 2 | " | 1,2 | " |
| 38 | X | 2 | " | 0,9 | 1,1,1-Trimethylolethan |
| 39 | X | 2 | Dodecandisäure | 1,2 | TCD-Diol |
| 40 | XI | 0,7 | Fibran | — | — |
| 41 | XI | 2 | Dodecandisäure | 1,4 | TCD-Diol |
| 42 | XI | 1,1 | Ölsäure | — | — |
| 43 | XII | 0,33 | Pripol 1040 | — | — |
| 44 | XII | 2 | Dodecandisäure | 1,4 | TCD-Diol |
| 45 | XIII | 0,55 | Pripol 1010 | — | — |
| 46 | XIV | 0,33 | Pripol 1040 | — | — |

TABELLE 2 (Fortsetzung)

| Bsp. | Farbstoff | C | Carbonsäure oder Carbonsäureanhydrid | A | Alkohol |
|---|---|---|---|---|---|
| 47 | XV | 1,1 | Erucasäure | — | — |
| 48 | XV | 0,55 | Pripol 1010 | — | — |
| 49 | XVI | 2 | Dodecandisäure | 1,2 | TCD-Diol |
| 50 | XVI | 2 | " | 1,4 | " |
| 51 | XVII | 1,5 | Fibran | — | — |
| 52 | XVII | 2 | " | — | — |
| 53 | XVIII | 2 | " | — | — |
| 54 | XVIII | 3 | " | — | — |
| 55 | XIX | 0,7 | " | — | — |
| 56 | XX | 1,5 | " | — | — |
| 57 | XX | 3 | MHPA | 1,8 | 1,6-Hexandiol |
| 58 | XXI | 1,2 | Dodecandisäure | 2 | 1,12-Octadecandiol |
| 59 | XXI | 1,4 | Dodecandisäure | 2 | " |
| 60 | XXI | 1,2 | Pripol 1010 | 2 | " |
| 61 | XXII | 1,2 | " | 2 | " |
| 62 | XXIII | 1,2 | Dodecandisäure | 2 | 1,12-Octadecandiol |
| 63 | XXIII | 1,4 | " | 2 | Polyglykol P 400 |
| 64 | XXIII | 0,4 | " | 1 | " |
| 65 | XXIV | 1 | Ricinolsäure | 1,1 | TCD-Diol |
| 66 | XXVII | 2 | " | 1,1 | 1,6-Hexandiol |
| 67 | XXVII | — | — | 2,2 | Oleylalkohol |
| 68 | XXVII | 0,2 | Pripol 1010 | 2,5 | " |
| 69 | XXIII | 1,2 | Fibran | — | — |
| 70 | XXIII | 1,5 | " | — | — |
| 71 | XXIII | 2 | " | — | — |
| 72 | XXIV | 3 | Erucasäure | — | — |
| 73 | XXV | 2 | Hexahydrophthalsäureanhydrid | 1,4 | Triethylenglykol |
| 74 | XXV | 2 | " | 1,4 | Tetraethylenglykol |
| 75 | XXV | 2,5 | " | 1 | Triethylenglykol |
| | | | | 0,6 | Trimethylolpropan |

TABELLE 2 (Fortsetzung)

| Bsp. | Farbstoff | C | Carbonsäure oder Carbonsäureanhydrid | A | Alkohol |
|---|---|---|---|---|---|
| 76 | XXVI | 0,9 | Dodecandisäure | 1,5 | Tetraethylenglykol |
| 77 | XXVI | 1,4 | " | 2 | " |
| 78 | XXVII | 4 | " | 3,5 | " |
| 79 | XXVIII | 4,5 | " | 3 | " |
| 80 | XXIX | 4 | " | 2,5 | " |
| | | | | 0,8 | Oleylalkohol |

Von den Farbstoffen der Beispiele 5—80 wurden analog zu den Beispielen 1—4 Druckfarben hergestellt, wobei jeweils durch Variation der Harzmenge eine Viskosität entsprechend einer Auslaufzeit von 23 Sekunden aus dem DIN-3 Becher eingestellt wurde. Die Druckfarben ergaben gelbe bis orange, farbstarke Drucke, wobei das Durchschlagverhalten dem der Druckfarben nach Beispiel 1—4 entsprach.

Beispiel 81

11,3 g 2,2-Bis-(4-aminophenyl)-propan, 100 ml Wasser und 28 ml 1N Salzsäure werden kurz verrührt und die Mischung durch Eiseinwerfen auf 0°C gebracht. Durch Zutropfen einer wäßrigen Lösung von 7 g Natriumnitrit wird diazotiert und die überschüssige salpetrige Säure nach 15 Minuten mit Amidosulfonsäure zerstört. Zu den geklärten Diazotierung tropft man bei 0—5°C in ca. 1 Std. eine Lösung von 42 g 5-Cyan-2-hydroxy-4-methyl-1-oleyl-pyridon-(5) und 3 g eines handelsüblichen Netzmittels auf Basis Natriumdioctylsulfosuccinat (Aerosol OT) in 350 ml Wasser und 14 ml 10 N Natronlauge. Nach 10 Stunden bei Raumtemperatur wird auf 50°C aufgeheizt, wobei alles auskuppelt. Der entstehende gelbe Farbstoff wird abgesaugt, mit Wasser gewaschen und i.Vak. bei 50°C getrocknet. Man erhält 53 g einer gelben Substanz der Formel

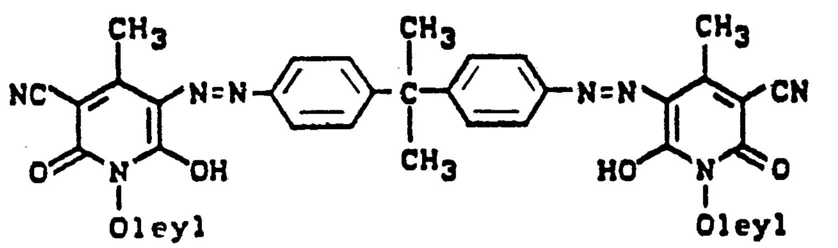

Löst man 6 Teile des Farbstoffes und 31 Teile Erkazit 899 in 63 Teilen Toluol, so erhält man eine Tiefdruckfarbe, die auf Papier neutralgelbe Drucke ergibt, die bereits ein sehr günstiges Durchschlagsverhalten zeigen. Eine analoge Druckfarbe aus 6 Teilen des Farbstoffes, 30 Teilen Erkazit 899 und 63 Teilen Toluol, die zusätzlich 0,7 Teile Aerosil 380 dispergiert enthält, liefert gleich farbstarke Drucke und zeigt eine nochmals reduzierte Durchschlagsneigung.

Beispiel 82

15,2 g 4-Methyl-2-nitro-anilin werden mit 70 ml 5 N-Salzsäure verrührt und wie üblich diazotiert. Die geklärte Diazotierung tropft man zu einer Mischung aus einer Lösung von 42 g 5-Cyan-2-hydroxy-4-methyl-1-oleyl-pyridon-(6) in 200 ml Toluol 70 ml Wasser, 6 g Bernsteinsäure und 8 ml 10 N Natronlauge, wobei man die Temperatur durch Eiseinwerfen bei 0—10°C und den pH-Wert durch Zutropfen von Natronlauge bei 5,5 hält. Die Kupplung ist nach 15 Min. beendet. Die Mischung wird auf 60°C aufgeheizt und die Toluolphase abgetrennt. Nach Trocknen über Natriumsulfat und Klären wird ein Teil des Toluols abdestilliert. Man erhält 130 g einer Lösung, die ca. 56 g des Farbstoffes der folgenden Formel enthält:

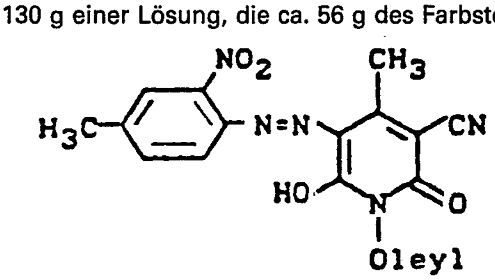

Eine daraus nach Beispiel 1 hergestellte Toluoltiefdruckfarbe ergibt farbstarke gelbe Drucke, zeigt jedoch ein etwas schlechteres Durchschlagverhalten als die Druckfarbe nach Beispiel 1. Eine analog zu Beispiel 2 hergestellte Druckfarbe zeigt dagegen auch auf Papieren mit niedrigem Flächengewicht ein ausgezeichnetes Durchschlagverhalten.

Analog zu der in Beispiel 82 beschriebenen Methode wurden aus den in Tabelle 3 aufgeführten Komponenten Farbstoffe hergestellt und daraus Druckfarben, die das gleiche Eigenschaftsbild zeigen, wie die Druckfarben nach Beispiel 82.

## Tabelle 3

| Bsp. Nr. | Diazokomponente | Kupplungskomponente |
|---|---|---|
| 83 | 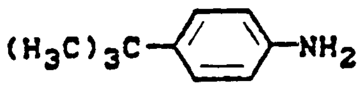 | 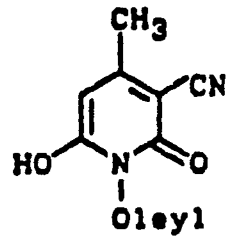 |
| 84 | 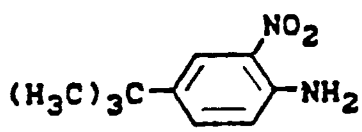 | " |
| 85 | 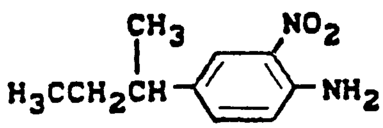 | " |
| 86 | 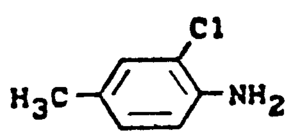 | " |
| 87 | 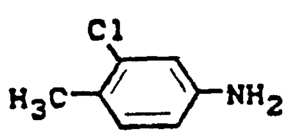 | " |

Tabelle 3

| Bsp. Nr. | Diazokomponente | Kupplungskomponente |
|---|---|---|
| 88 | 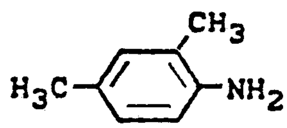 | 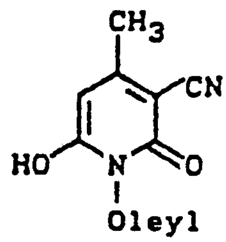 |
| 89 | 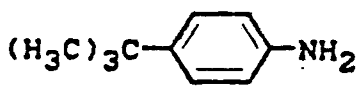 | 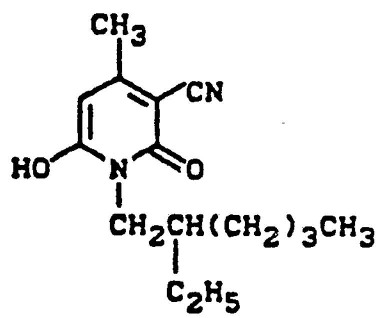 |
| 90 | 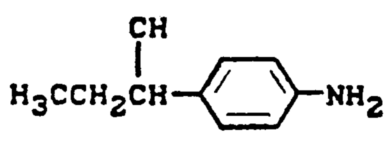 | " |
| 91 | 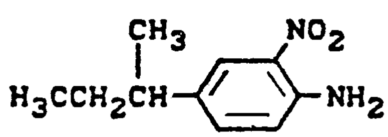 | " |

**Patentansprüche**

1. Farbstoffe, die dadurch erhältlich sind, daß man Pyridonazofarbstoffe der Formel

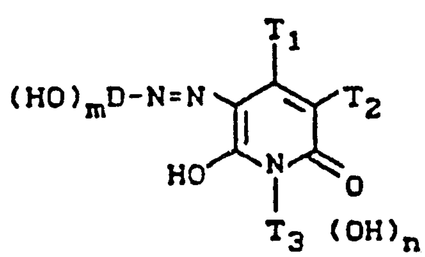 I

in der

D den Rest einer Diazokomponente,

$T_1$ Alkyl, Aryl, —$COOT_4$,

$T_2$ H, —CN, —$COOT_4$, —CONH—$T_5(OH)_n$

$T_3$ aliphatischer oder araliphatischer Rest, der durch ein oder mehrere Sauerstoffatome unterbrochen sein kann,

$T_4$ Wasserstoff, Alkyl,

$T_5$ aliphatischer oder araliphatischer Rest, die durch ein oder mehrere Sauerstoffatome unterbrochen sein können,

m, n 0, 1, 2, 3 oder 4, mit der Maßgabe, daß die Summe aus m + n 1, 2, 3 oder 4 beträgt, bezeichnen, mit Di- oder Polycarbonsäuren unter esterartiger Verknüpfung von mindestens zwei gleichen oder verschiedenen Pyridonazofarbstoffen umsetzt.

2. Farbstoffe, die dadurch erhältlich sind, daß man Pyridonazofarbstoffe der Formel

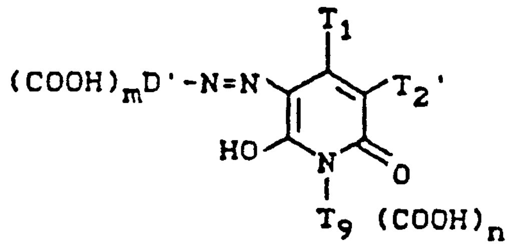

II

in der

m, n und $T_1$ die zu Formel I in Anspruch 1 angegebenen Bedeutungen haben,

$T_2'$ H, —CN, —$COOT_4$, mit der zu Formel I angegebenen Bedeutung für $T_4$,

$T_9$ einen aliphatischen oder araliphatischen Rest, der durch ein oder mehrere Sauerstoffatome unterbrochen sein kann,

D' den Rest einer Diazokomponente bezeichnet, mit Di- oder Polyhydroxyverbindungen unter esterartiger Verknüpfung von mindestens zwei gleichen oder verschiedenen Pyridonazofarbstoffen umsetzt.

3. Verfahren zur Herstellung von Illustrationstiefdruckfarben, dadurch gekennzeichnet, daß man Farbstoffe gemäß den Ansprüchen 1 und 2 verwendet.

4. Verfahren zur Herstellung von Illustrationstiefdruckfarben, dadurch gekennzeichnet, daß man Pyridonazofarbstoffe der Formel

$$[P_{y1}]—N=N—L—N=N—[P_{y2}] \qquad VI$$

verwendet,

in der

$[P_{y1}]$, $[P_{y2}]$ Pyridonreste, die in einer ihrer tautomeren Formen der Formeln

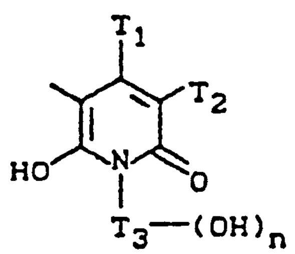

und

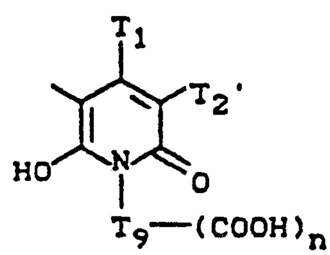

entsprechen,

in denen

$T_1$, $T_2$, $T_3$, $T_2'$, $T_9$ und n die zu den Formeln I und II in den Ansprüchen 1 und 2 angegebenen Bedeutungen haben, bezeichnen und

L für einen

gegenbenenfalls substituierten Phenylenrest, wie m- oder p-Phenylen, oder einen Rest der Formel

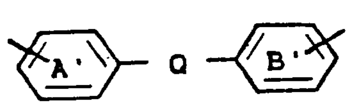

steht, wobei die Ringe A' und B' gegebenenfalls substituiert sein können und

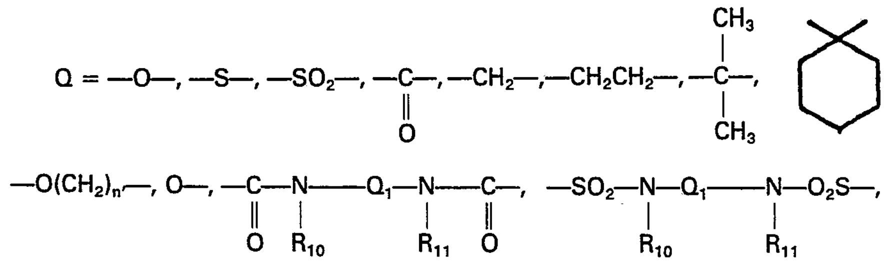

$-SO_2-O-Q_2-O-SO_2-$ oder $-O-O_2S-Q_3-SO_2-O-$ bezeichnet,
wobei

$R_{10}$, $R_{11}$ Wasserstoff, $C_1-C_6$-Alkyl oder $C_3-C_7$-Cycloalkyl bedeuten, die z.B. durch —OH, oder —CN substituiert sein können und wobei $R_{10}$, $R_{11}$ auch zusammentreten und eine $-(CH_2)_{1-4}-$ Brücke bilden können,

$Q_1$ einen gegebenenfalls substituierten Kohlenwasserstoffrest, dessen C-Kette durch ein oder mehrere nicht-nachbarständige O-Atome oder

—N-Gruppen unterbrochen sein kann,
$R_{12}$

wobei

$R_{12}$ Wasserstoff oder $C_1-C_4$-Alkyl bedeutet, das z.B. durch —OH substituiert sein kann und wobei dieser Rest sich vorzugsweise von einem $C_2-C_{20}$-Alkan, einem $C_3-C_7$-Cycloalkan, vorzugsweise Cyclohexan, einem Phenyl- oder Naphthyl-$C_1-C_6$-alkan, Benzol oder Naphthalin ableitet, und wobei $Q_2$, $Q_3$ aromatische Reste und

n' 1, 2, 3, 4, 5 oder 6 bezeichnen.

5. Verfahren zur Herstellung von Illustrationstiefdruckfarben, dadurch gekennzeichnet, daß man Pyridonazofarbstoffe der Formel

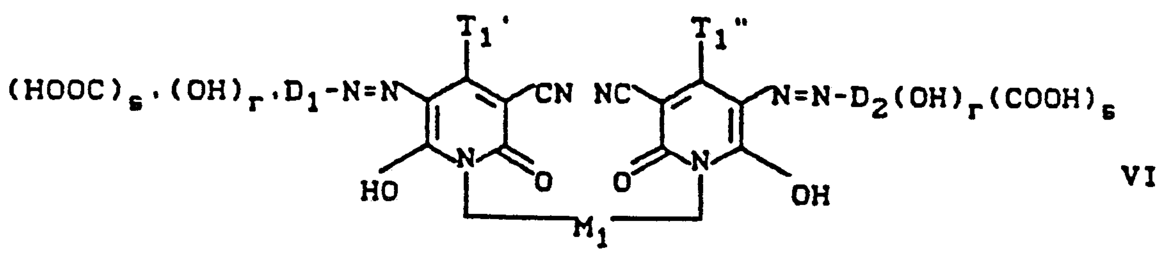

VII

verwendet, wobei

$D_1$, $D_2$ den Rest einer Diazokomponente

$T_1'$, $T_1''$ Alkyl, Aryl, $-COOT_4'$,

$T_4'$ Wasserstoff, Alkyl,

$M_1$ den Rest eines gegebenenfalls substituierten Kohlenwasserstoffes, dessen C-Kette durch ein oder mehrere nicht-nachbarständige O-Atome oder

—N-Gruppen unterbrochen sein kann,
$R_{13}$

$R_{13}$ Wasserstoff oder $C_1-C_4$-Alkyl, das z.B durch —OH substituiert sein kann, und

r, r', s, s' 0, 1 oder 2 bezeichnen.

6. Verfahren zur Herstellung von Illustrationstiefdruckfarben, dadurch gekennzeichnet, daß man Pyridonazofarbstoffe der Formel

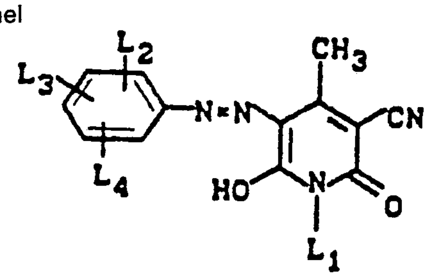

VIII

verwendet,
in der
$L_1$ gegebenenfalls substituiertes $C_{12}$—$C_{22}$-Alkyl, gegebenenfalls substituiertes $C_{12}$—$C_{22}$-Alkenyl, $-L_5-O-L_6$,

$$-L_5-O-\underset{\underset{O}{\|}}{C}-L_6 \quad -CH_2CH_2O(CH_2CH_2O)_tL_7, \quad -CH_2CH_2O(CH_2CH_2O)_t\overset{\overset{O}{\|}}{C}-L_7',$$

$$-CH_2CH_2CH_2O(CH_2CH_2O)_tL_7, \quad -CH_2CH_2CH_2O(CH_2CH_2O_t)-\underset{\underset{O}{\|}}{C}-L_7, \quad -L_8COOL_9,$$

$L_5$ $C_2$—$C_{12}$-Alkylen,
$L_6$ $C_2$—$C_{22}$-Alkyl, $C_2$—$C_{22}$-Alkenyl,
$L_7$ Wasserstoff, $C_1$—$C_{22}$-Alkyl, $C_2$—$C_{22}$-Alkenyl, gegebenenfalls substituiertes Phenyl,
$L_8$ $C_1$—$C_{12}$-Alkylen,
$L_7'$ $C_1$—$C_{22}$-Alkyl, $C_2$—$C_{22}$-Alkenyl, gegebenenfalls substituiertes Phenyl,
$L_9$ Wasserstoff, $C_1$—$C_{22}$-Alkyl oder $C_2$—$C_{22}$-Alkenyl,
t 0, 1, 2, 3, 4, 5,
$L_2$ Wasserstoff, Halogen wie F, Cl, Br, $C_1$—$C_{22}$-Alkyl, Cyclopentyl, Cyclohexyl, Cyclopentenyl, Cyclohexenyl, Aralkyl insbesondere Phenyl-$C_1$—$C_4$-alkyl und Naphthyl-$C_1$—$C_4$-alkyl, $-CF_3$, $-NO_2$, —CN, $C_1$—$C_4$-Alkoxy, $C_1$—$C_4$-Alkoxycarbonyl, Mono- und Di-$C_1$—$C_8$-alkyl-carbamoyl, Mono- und Di-$C_1$—$C_8$-alkylsulfamoyl,
$L_3$ Wasserstoff, Halogen wie F, Cl, Br, —CN, $C_1$—$C_4$-Alkyl, $C_1$—$C_4$-Alkoxy, $C_1$—$C_4$-Alkoxycarbonyl und
$L_4$ Wasserstoff und $C_1$—$C_4$-Alkyl bezeichnen.

7. Farbstoffe der Formel

$$[P_{y1}]-N=N-L'-N=N-[P_{y2}] \qquad IX,$$

in der
$[P_{y1}]$, $[P_{y2}]$ die zu Formel VI angegebenen Bedeutungen haben und
L' für

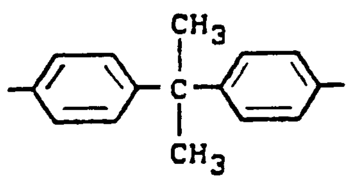 , 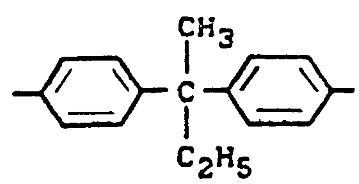 ,

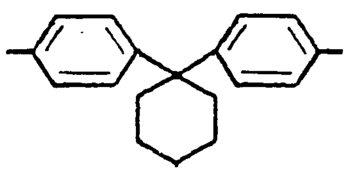 , 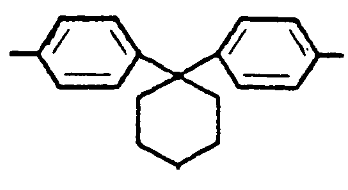

steht,
wobei die Phenylen, Cyclopentylen und Cyclohexylenreste z.B. durch $C_1$—$C_4$-Alkyl und die Phenylenreste außerdem durch $-NO_2$ und Cl substituiert sein können.

8. Verfahren zur Herstellung von Illustrationstiefdruckfarben gemäß den Ansprüchen 3—6, dadurch gekennzeichnet, daß man solche Farbstoffe verwendet, bei denen der Massenanteil am Farbstoffmolekül derjenigen Kohlenwasserstoffreste, die nicht unmittelbar an die Azogruppe gebunden sind, wenigstens 20%, bevorzugt wenigstens 25%, besonders bevorzugt wenigstens 30% beträgt.

9. Verfahren zur Herstellung von Illustrationstiefdruckfarben gemäß den Ansprüchen 3—6, dadurch gekennzeichnet, daß man Pyridonazofarbstoff-Pigment-Gemische verwendet.

10. Verfahren gemäß den Ansprüchen 3—6 zur Herstellung von Illustrationstiefdruckfarben auf Toluolbasis.

**Revendications**

1. Colorants qui peuvent être obtenus par réaction de colorants pyridone-azoïques de formule

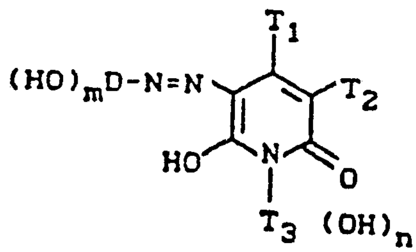

I

dans laquelle

D représente le reste d'un composant diazotable,

$T_1$ est un groupe alkyle, aryle, $—COOT_4$,

$T_2$ représente H, —CN, $—COOT_4$, $—CONH—T_5(OH)_n$

$T_3$ est un reste aliphatique ou araliphatique qui peut être interrompu par un ou plusieurs atomes d'oxygène,

$T_4$ est l'hydrogène ou un groupe alkyle,

$T_5$ est un reste aliphatique ou araliphatique qui peut être interrompu par un ou plusieurs atomes d'oxygène,

m, n ont la valeur 0, 1, 2, 3 ou 4, sous réserve que la somme $m + n$ s'élève à 1, 2, 3 ou 4, avec des acides dicarboxyliques ou polycarboxyliques avec liaison du genre ester d'au moins deux colorants pyridone-azoïques identiques ou différents.

2. Colorants qui peuvent être obtenus par réaction de colorants pyridone-azoïques de formule

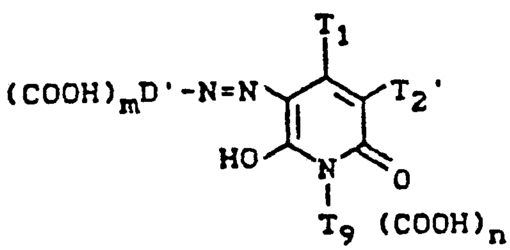

II

dans laquelle

m, n et $T_1$ ont les définitions indiquées pour la formule I dans la revendication 1,

$T_2'$ représente H, un groupe —CN, $—COOT_4$, avec pour $T_4$ la définition indiquée à propos de la formule I,

$T_9$ est un reste aliphatique ou araliphatique qui peut être interrompu par un ou plusieurs atomes d'oxygène,

D' est le reste d'un composant diazotable, avec des composés dihydroxyliques ou polyhydroxyliques, avec liaison du genre ester d'au moins deux colorants pyridone-azoïques identiques ou différents.

3. Procédé de production d'encres pour l'illustration par héliogravure, caractérisé en ce qu'on utilise des colorants suivant les revendications 1 et 2.

4. Procédé de production d'encres pour l'illustration par héliogravure, caractérisé en ce qu'on utilise des colorants pyridone-azoïques de formule

$$[P_{y1}]—N=N—L—N=N—[P_{y2}] \qquad VI$$

dans laquelle

$[P_{y1}]$, $[P_{y2}]$ sont des restes de pyridone qui correspondent sous l'une de leurs formes tautomères aux formules

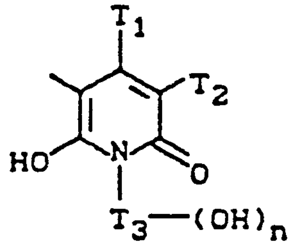

et

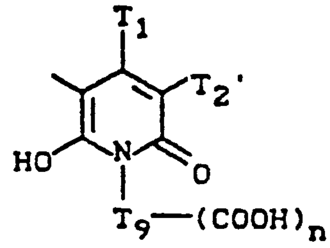

formules dans lesquelles

$T_1$, $T_2$, $T_3$, $T_2'$, $T_9$ et n ont les définitions indiquées à propos des formules I et II dans les revendications 1 et 2, et

L représente un reste phénylène tel que m- ou p-phénylène éventuellement substitué ou un reste de formule

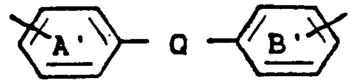

où les noyaux A' et B' peuvent être éventuellement substitués et

Q représente

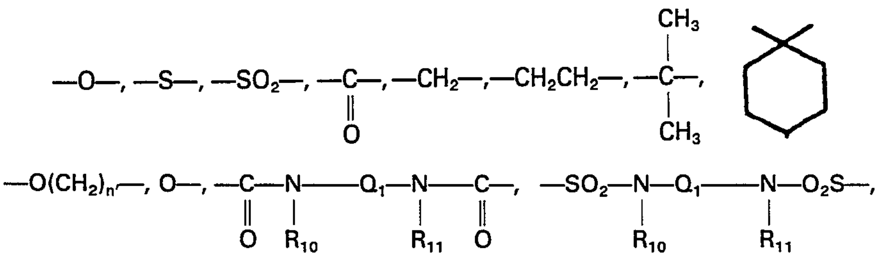

$—SO_2—O—Q_2—O—SO_2—$ ou $—O—O_2S—Q_3—SO_2—O—$

ou

$R_{10}$, $R_{11}$ représentent l'hydrogène, des groupes alkyle en $C_1$ à $C_6$ ou cycloalkyle en $C_3$ à $C_7$ qui peuvent être substitués le cas échéant par un groupe —OH ou —CN et $R_{10}$, $R_{11}$ peuvent aussi s'unir et former un pont $—(CH_2)_{1-4}—$

$Q_1$ est un reste d'hydrocarbure éventuellement substitué dont la chaîne carbonée peut être interrompue par un ou plusieurs groupes

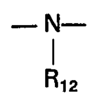

ou atomes d'oxygène n'occupant pas de positions voisines,

$R_{12}$ désigne l'hydrogène ou un groupe alkyle en $C_1$ à $C_4$ qui peut être substitué par exemple par un radical —OH et ce reste est dérivé de préférence d'un alcane en $C_2$ à $C_{20}$, d'un cycloalcane en $C_3$ à $C_7$, de préférence de cyclohexane, d'un phényl- ou naphtyl-(alcane en $C_1$ à $C_6$), du benzène ou du naphtalène et $Q_2$, $Q_3$ sont des restes aromatiques, et

n' a la valeur 1, 2, 3, 4, 5 ou 6.

5. Procédé de production d'encres pour l'illustration par héliogravure, caractérisé en ce qu'on utilise des colorants pyridone-azoïques de formule

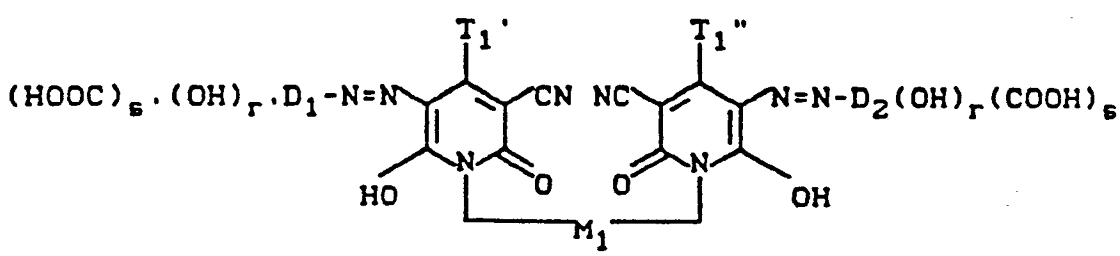

VII

dans laquelle

$D_1$, $D_2$ représentent le reste d'un composant diazotable

$T_1'$, $T_1''$ sont des groupes alkyle, aryle, $—COOT_4'$,

$T_4'$ est l'hydrogène ou un groupe alkyle,

$M_1$ est le reste d'un hydrocarbure éventuellement substitué dont la chaîne carbonée peut être interrompue par un ou plusieurs groupes

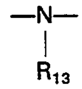

ou atomes d'oxygène n'occupant pas de positions voisines,

$R_{13}$ est l'hydrogène ou un groupe alkyle en $C_1$ à $C_4$ qui peut être substitué par exemple par un radical —OH et

r, r', s, s' ont la valeur 0, 1 ou 2.

6. Procédé de production d'encres pour l'illustration par héliogravure, caractérisé en ce qu'on utilise des colorants pyridone-azoïques de formule

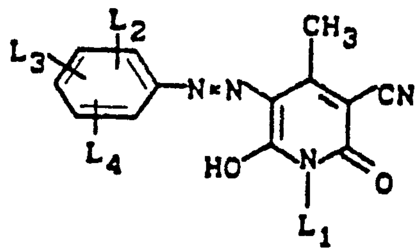

VIII

dans laquelle

$L_1$ désigne un groupe alkyle en $C_{12}$ à $C_{22}$ éventuellement substitué, un groupe alcényle en $C_{12}$ à $C_{22}$ éventuellement substitué, $—L_5—O—L_6$,

$$—L_5—O—\underset{\underset{O}{\|}}{C}—L_6,\ —CH_2CH_2O(CH_2CH_2O)_tL_7,$$

$$—CH_2CH_2O(CH_2CH_2O)_t\overset{\overset{O}{\|}}{C}—L_7',\ —CH_2CH_2CH_2O(CH_2CH_2O)_tL_7,$$

$$—CH_2CH_2CH_2O(CH_2CH_2O_t)—\underset{\underset{O}{\|}}{C}—L_7,\ —L_8COOL_9,$$

$L_5$ est un groupe alkylène en $C_2$ à $C_{12}$,

$L_6$ est un groupe alkyle en $C_2$ à $C_{22}$, alcényle en $C_2$ à $C_{22}$,

$L_7$ est l'hydrogène, un groupe alkyle en $C_1$ à $C_{22}$, alcényle en $C_2$ à $C_{22}$, phényle éventuellement substitué,

$L_8$ est un groupe alkylène en $C_1$ à $C_{12}$,

$L_7'$ est un groupe alkyle en $C_1$ à $C_{22}$, alcényle en $C_2$ à $C_{22}$, phényle éventuellement substitué,

$L_9$ est l'hydrogène, un groupe alkyle en $C_1$ à $C_{22}$ ou alcényle en $C_2$ à $C_{22}$,

t a la valeur 0, 1, 2, 3, 4 ou 5,

$L_2$ est l'hydrogène, un halogène tel que F, Cl, Br, un groupe alkyle en $C_1$ à $C_{22}$, cyclopentyle, cyclohexyle, cyclopentényle, cyclohexényle, aralkyle, notamment phényl-(alkyle en $C_1$ à $C_4$) et naphtyl-(alkyle en $C_1$ à $C_4$), $—CF_3$, $—NO_2—$, CN, alkoxy en $C_1$ à $C_4$, (alkoxy en $C_1$ à $C_4$)-carbonyle, mono- ou di-(alkyle en $C_1$ à $C_8$)-carbamoyle, mono- ou di-(alkyle en $C_1$ à $C_8$)-sulfamoyle,

$L_3$ est l'hydrogène, un halogène tel que F, Cl, Br, un groupe —CN, alkyle en $C_1$ à $C_4$, alkoxy en $C_1$ à $C_4$, (alkoxy en $C_1$ à $C_4$)-carbonyle et

$L_4$ est l'hydrogène ou un groupe alkyle en $C_1$ à $C_4$.

7. Colorants de formule

$$[P_{y1}]—N{=}N—L'—N{=}N—[P_{y2}] \qquad IX,$$

dans laquelle

$[P_{y1}]$, $[P_{y2}]$ ont les définitions indiquées à propos de la formule VI et

L' représente

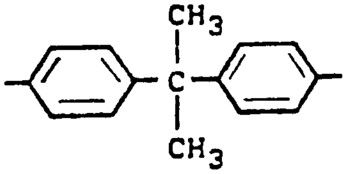 , 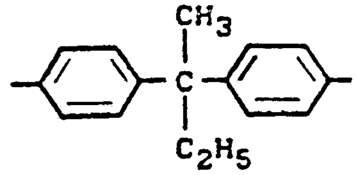 ,

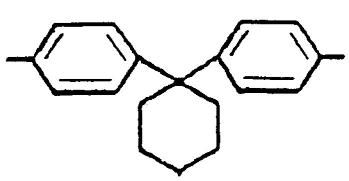 , 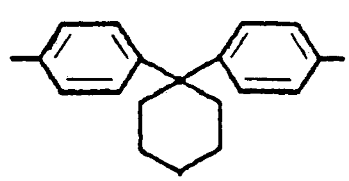

les restes phénylène, cyclopentylène et cyclohexylène pouvant être substitués par des radicaux alkyle en $C_1$ à $C_4$ et les restes phénylène pouvant en outre être substituées par $—NO_2$ et Cl.

8. Procédé de production d'encres pour illustration par héliogravure suivant les revendications 3 à 6, caractérisé en ce qu'on utilise des colorants dans lesquels la contribution apportée à la masse moléculaire par les restes hydrocarbonés qui ne sont pas directement liés au groupe azoïque s'élève au minimum à 20%, de préférence au minimum à 25% et notamment au minimum à 30%.

9. Procédé de production d'encres pour illustration par héliogravure suivant les revendications 3 à 6, caractérisé en ce qu'on utilise des mélanges de colorants pyridone-azoïques et de pigments.

10. Procédé suivant les revendications 3 à 6, pour la préparation d'encres pour l'illustration par héliogravure à base de toluène.

**Claims**

1. Dyestuffs which can be obtained by reacting pyridone azo dyestuffs of the formula

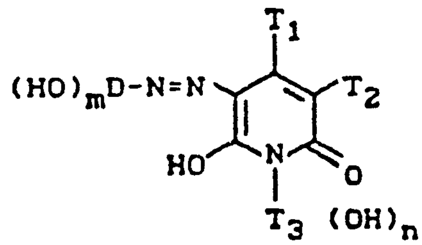

I

in which

D denotes the radical of a diazo component,

$T_1$ denotes alkyl, aryl, or $—COOT_4$,

$T_2$ denotes H, —CN, $—COOT_4$ or $—CONH—T_5(OH)_n$,

$T_3$ denotes an aliphatic or araliphatic radical which can be interrupted by one or more oxygen atoms,

$T_4$ denotes hydrogen or alkyl,

$T_5$ denotes an aliphatic or araliphatic radical which can be interrupted by one or more oxygen atoms, and

m and n denote 0, 1, 2, 3 or 4, subject to the proviso that the sum of m + n is 1, 2, 3 or 4, with dicarboxylic or polycarboxylic acids with the formation of an ester-like linkage between at least two identical or different pyridone azo dyestuffs.

2. Dyestuffs which can be obtained by reacting pyridone azo dyestuffs of the formula

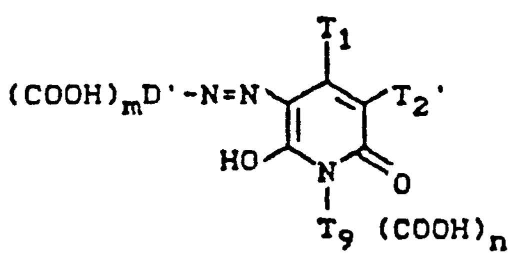

II

in which

m, n and $T_1$ have the meanings indicated for formula I in Claim 1,

$T_2'$ denotes H, —CN or $—COOT_4$ in which $T_4$ has the meaning indicated for formula I,

$T_9$ denotes an aliphatic or araliphatic radical which can be interrupted by one or more oxygen atoms, and

D' denotes the radical of a diazo component, with dihydroxy or polyhydroxy compounds with the formation of an ester-like linkage between at least two identical or different pyridone azo dyestuffs.

3. Process for the preparation of halftone gravure printing inks, characterized in that dyestuffs according to Claims 1 and 2 are used.

4. Process for the preparation of halftone gravure printing inks, characterized in that pyridone azo dyestuffs of the formula

$$[P_{y1}]—N=N—L—N=N—[P_{y2}] \qquad VI$$

in which

[$P_{y1}$], [$P_{y2}$] denote pyridone radicals which, in one of their tautomeric forms, correspond to the formulae

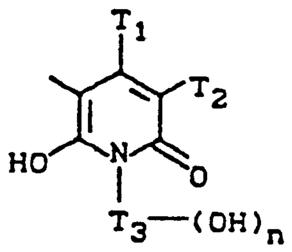

and

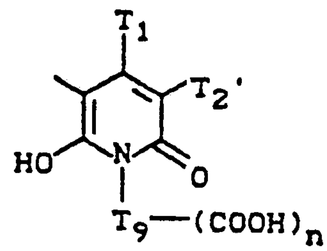

in which

$T_1$, $T_2$, $T_3$, $T_2'$, $T_9$ and n have the meanings indicated for the formulae I and II in Claims 1 and 2 and

L represents an optionally substituted phenylene radical, such as m-phenylene or p-phenylene, or a radical of the formula

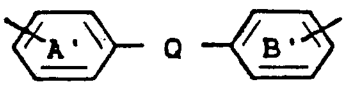

wherein

the rings A′ and B′ can optionally be substituted and

Q denotes $-O-$, $-S-$, $-SO_2-$, $-\underset{\underset{O}{\|}}{C}-$, $-CH_2-$, $-CH_2CH_2-$, $-\underset{\underset{CH_3}{|}}{\overset{\overset{CH_3}{|}}{C}}-$, 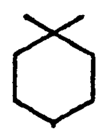

$-O(CH_2)_{n'}-$, $O-$, $-\underset{\underset{O}{\|}}{C}-\underset{\underset{R_{10}}{|}}{N}-Q_1-\underset{\underset{R_{11}}{|}}{N}-\underset{\underset{O}{\|}}{C}-$, $-SO_2-\underset{\underset{R_{10}}{|}}{N}-Q_1-\underset{\underset{R_{11}}{|}}{N}-O_2S-$,

$-SO_2-O-Q_2-O-SO_2-$ or $-O-O_2S-Q_3-SO_2-O-$

wherein

$R_{10}$ and $R_{11}$ denote hydrogen, $C_1$—$C_6$-alkyl or $C_3$—$C_7$-cycloalkyl each of which can be substituted, for example by —OH or —CN, and wherein $R_{10}$ and $R_{11}$ can also come together and form a $-(CH_2)_{1-4}$ bridge,

$Q_1$ denotes an optionally substituted hydrocarbon radical in which the C chain can be interrupted by one or more non-adjacent O atoms or

$-\underset{\underset{R_{12}}{|}}{N}-$ groups

wherein

$R_{12}$ denotes hydrogen or $C_1$—$C_4$-alkyl which can be substituted, for example by —OH, and this radical being preferably derived from a $C_2$—$C_{20}$-alkane, a $C_3$—$C_7$-cycloalkane, preferably cyclohexane, a phenyl —$C_1$—$C_6$-alkane or a naphthyl —$C_1$—$C_6$-alkane, benzene or naphthalene, and wherein $Q_2$ and $Q_3$ denote aromatic radicals and n′ denotes 1, 2, 3, 4, 5 or 6, are used.

5. Process for the preparation of halftone gravure printing inks, characterized in that pyridone azo dyestuffs of the formula

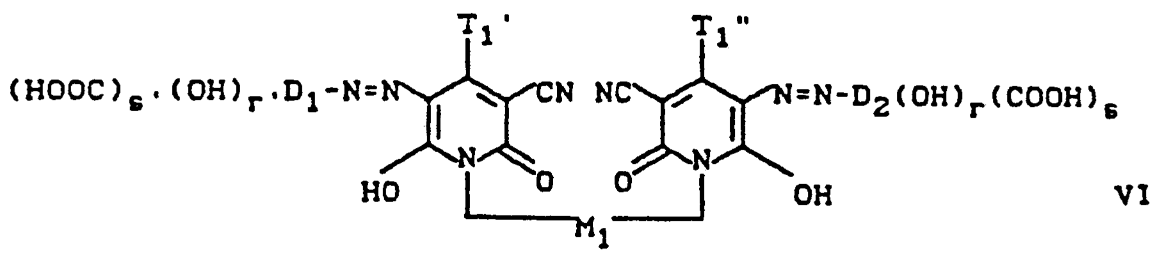

VII

$D_1$ and $D_2$ denote the radical of a diazo component,

$T_1'$ and $T_1''$ denote alkyl, aryl or $-COT_4'$,

$T_4'$ denotes hydrogen or alkyl,

$M_1$ denotes the radical or an optionally substituted hydrocarbon in which the C chain can be

interrupted by one or more non-adjacent O atoms of

$$-\underset{\underset{R_{13}}{|}}{N}-$$

groups,

$R_{13}$ denotes hydrogen or $C_1$—$c_4$-alkyl which can be substituted, for example by —OH, and

r, r', s and s' denote 0, 1 or 2, are used.

6. Process for the preparation of halftone gravure printing inks, characterized in that pyridone azo dyestuffs of the formula

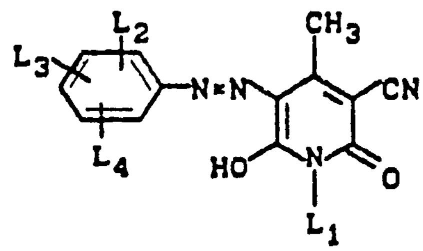

VIII

in which

$L_1$ denotes optionally substituted $C_{12}$—$C_{22}$-alkyl, optionally substituted $C_{12}$—$C_{22}$-alkenyl, —$L_5$—O—$L_6$,

$$-L_5-O-\underset{\underset{O}{\|}}{C}-L_6,\ -CH_2CH_2O(CH_2CH_2O)_tL_7,$$

$$-CH_2CH_2O(CH_2CH_2O)_t\overset{\overset{O}{\|}}{C}-L_7',\ -CH_2CH_2CH_2O(CH_2CH_2O)_tL_7,$$

$$-CH_2CH_2CH_2O(CH_2CH_2O_t)-\underset{\underset{O}{\|}}{C}-L_7,\ -L_8COOL_9,$$

$L_5$ denotes $C_2$—$C_{12}$-alkylene,

$L_6$ denotes $C_2$—$C_{22}$-alkyl or $C_2$—$C_{22}$-alkenyl,

$L_7$ denotes hydrogen, $C_1$—$C_{22}$-alkyl, $C_2$—$C_{22}$-alkenyl or optionally substituted phenyl,

$L_8$ denotes $C_1$—$C_{12}$-alkylene,

$L_7'$ denotes $C_1$—$C_{22}$-alkyl, $C_2$—$C_{22}$-alkenyl or optionally substituted phenyl,

$L_9$ denotes hydrogen, $C_1$—$C_{22}$-alkyl or $C_2$—$C_{22}$-alkenyl,

t denotes 0, 1, 2, 3, 4 or 5,

$L_2$ denotes hydrogen, halogen, such as F, Cl or Br, $C_1$—$C_{22}$-alkyl, cyclopentyl, cyclohexyl, cyclopentenyl, cyclohexenyl, aralkyl, in particularly phenyl-$C_1$—$C_4$-alkyl and naphthyl-$C_1$—$C_4$-alkyl, —$CF_3$, —$NO_2$, —CN, $C_1$—$C_4$-alkoxy, $C_1$—$C_4$-alkoxycarbonyl, mono-$C_1$—$C_8$-alkylcarbamoyl, di-$C_1$—$C_8$-alkylcarbamoyl, mono-$C_1$—$C_8$-alkyl-sulphamoyl and di-$C_1$—$C_8$-alkylsulphamoyl,

$L_3$ denotes hydrogen, halogen, such as F, Cl or Br, —CN, $C_1$—$C_4$-alkyl, $C_1$—$C_4$-alkoxy or $C_1$—$C_4$-alkoxycarbonyl and

$L_4$ denotes hydrogen and $C_1$—$C_4$-alkyl, are used.

7. Dyestuffs of the formula

$$[P_{y1}]-N=N-L'-N=N-[P_{y2}] \qquad IX$$

in which

$[P_{y1}]$ and $[P_{y2}]$ have the meanings indicated for formula VI and

L' represents

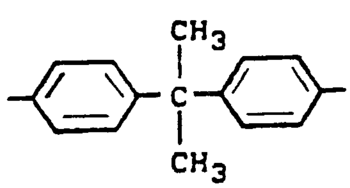

,

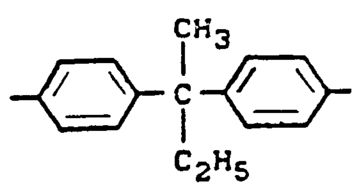

,

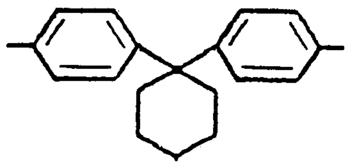 , 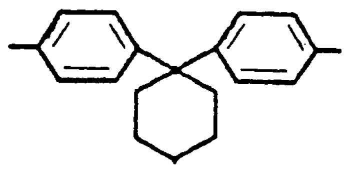

wherein the phenylene, cyclopentylene and cyclohexylene radicals can be substituted, for example by $C_1$—$C_4$-alkyl, and the phenylene radicals can be additionally substituted by —$NO_2$ and Cl.

8. Process for the preparation of halftone gravure printing inks according to Claims 3—6, characterized in that dyestuffs in which the proportion by weight in the dyestuff molecule of hydrocarbon radicals not directly attached to the azo group is at least 20%, preferably at least 25% and particularly preferably at least 30%, are used.

9. Process for the preparation of halftone gravure printing inks according to Claims 3—6, characterized in that pyridone azo dyestuff/pigment mixtures are used.

10. Process according to Claims 3—6 for the preparation of halftone gravure printing inks based on toluene.